# EUROPEAN PATENT SPECIFICATION

(11) **EP 3 637 624 B1**
(45) Date of publication and mention of the grant of the patent: **24.01.2024**
(21) Application number: 19214719.7
(22) Date of filing: 22.12.2015
(51) Int. Cl.: H04B 1/38, H04W 52/28, H02J 50/90, H02J 50/80

(54) **SYSTEM AND METHOD FOR CONTROLLING COMMUNICATION BETWEEN WIRELESS POWER TRANSMITTER MANAGERS**
SYSTEM UND VERFAHREN ZUR STEUERUNG DER KOMMUNIKATION ZWISCHEN VERWALTERN VON DRAHTLOSEN STROMSENDERN
SYSTÈME ET PROCÉDÉ POUR COMMANDER UNE COMMUNICATION ENTRE DES GESTIONNAIRES D'ÉMETTEUR DE PUISSANCE SANS FIL

(30) Priority: 30.12.2014 US 201414586261
(43) Date of publication of application: 15.04.2020
(62) Divisional of application: 15876033.0
(73) Proprietor: Energous Corporation, San Jose CA 95134 (US)
(72) Inventor: LEABMAN, Michael A., San Ramon, CA 94582 (US); BELL, Douglas, Pleasanton, CA 94588 (US)
(74) Representative: Boult Wade Tennant LLP

(56) References cited:
- US-A1- 2013 328 417

## Description

### CROSS-REFERENCE TO RELATED APPLICATIONS

This application is a continuation-in-part of U.S. Non-Provisional Patent Application Serial No. 14/272,124, filed May 7, 2014, entitled "System and Method for Controlling Communication Between Wireless Power Transmitter Managers," .

This application relates to U.S. Non-Provisional Patent Application Serial No. 13/891,430, filed May 10, 2013, entitled "Methodology For Pocket-forming;" U.S. Non-Provisional Patent Application Serial No. 13/925,469, filed June 24, 2013, entitled "Methodology for Multiple Pocket-Forming;" U.S. Non-Provisional Patent Application Serial No. 13/946,082, filed July 19, 2013, entitled "Method for 3 Dimensional Pocket-forming;" U.S. Non-Provisional Patent Application Serial No. 13/891,399, filed May 10, 2013, entitled "Receivers for Wireless Power Transmission;" U.S. Non-Provisional Patent Application Serial No. 13/891,445, filed May 10, 2013, entitled "Transmitters for Wireless Power Transmission;" U.S. Non-Provisional Patent Application Serial No. 14/336,987, filed July 21, 2014, entitled "System and Method for Smart Registration of Wireless Power Receivers in a Wireless Power Network," U.S. Non-Provisional Patent Application Serial No. 14/286,289, filed May 23, 2014, entitled "System and Method for Generating a Power Receiver Identifier in a Wireless Power Network," U.S. Non-Provisional Patent Application Serial No. 14/583,625, filed December 27, 2014, entitled "Receivers for Wireless Power Transmission," U.S. Non-Provisional Patent Application Serial No. 14/583,630, filed December 27, 2014, entitled "Methodology for Pocket-Forming," U.S. Non-Provisional Patent Application Serial No. 14/583,634, filed December 27, 2014, entitled "Transmitters for Wireless Power Transmission," U.S. Non-Provisional Patent Application Serial No. 14/583,640, filed December 27, 2014, entitled "Methodology for Multiple Pocket-Forming," U.S. Non-Provisional Patent Application Serial No. 14/583,641, filed December 27, 2014, entitled "Wireless Power Transmission with Selective Range," U.S. Non-Provisional Patent Application Serial No. 14/583,643, filed December 27, 2014, entitled "Method for 3 Dimensional Pocket-Forming,".

### TECHNICAL FIELD

The present disclosure relates generally to wireless power transmission.

### BACKGROUND

Portable electronic devices such as smart phones, tablets, notebooks and other electronic devices have become an everyday need in the way we communicate and interact with others. The frequent use of these devices may require a significant amount of power, which may easily deplete the batteries attached to these devices. Therefore, a user is frequently needed to plug in the device to a power source, and recharge such device. This may require having to charge electronic equipment at least once a day, or in high-demand electronic devices more than once a day.

Such an activity may be tedious and may represent a burden to users. For example, a user may be required to carry chargers in case his electronic equipment is lacking power. In addition, users have to find available power sources to connect to. Lastly, users must plugin to a wall or other power supply to be able to charge his or her electronic device. However, such an activity may render electronic devices inoperable during charging.

Current solutions to this problem may include devices having rechargeable batteries. However, the aforementioned approach requires a user to carry around extra batteries, and also make sure that the extra set of batteries is charged. Solar-powered battery chargers are also known, however, solar cells are expensive, and a large array of solar cells may be required to charge a battery of any significant capacity. Other approaches involve a mat or pad that allows charging of a device without physically connecting a plug of the device to an electrical outlet, by using electromagnetic signals. In this case, the device still requires to be placed in a certain location for a period of time in order to be charged. Assuming a single source power transmission of electro-magnetic (EM) signal, an EM signal gets reduced by a factor proportional to 1/r2 in magnitude over a distance r, in other words, it is attenuated proportional to the square of the distance. Thus, the received power at a large distance from the EM transmitter is a small fraction of the power transmitted. To increase the power of the received signal, the transmission power would have to be boosted. Assuming that the transmitted signal has an efficient reception at three centimeters from the EM transmitter, receiving the same signal power over a useful distance of three meters would entail boosting the transmitted power by 10,000 times. Such power transmission is wasteful, as most of the energy would be transmitted and not received by the intended devices, it could be hazardous to living tissue, it would most likely interfere with most electronic devices in the immediate vicinity, and it may be dissipated as heat.

In yet another approach such as directional power transmission, it would generally require knowing the location of the device to be able to point the signal in the right direction to enhance the power transmission efficiency. However, even when the device is located, efficient transmission is not guaranteed due to reflections and interference of objects in the path or vicinity of the receiving device. US013/32841 7A1 discloses an electric power transmitting apparatus that has a sub-electric power transmission mode, and a main electric power transmission mode for transmitting power larger than that transmitted in the sub-electric power transmission mode.

### Summary

The present invention provides a method for selecting which power transmitter should deliver wireless power to a device in a wireless power delivery network according to claim 1,a non-transitory, computer-readable storage medium storing one or more programs in line with claim 10 and a management system as defined by claim 11.

Additional features and advantages of an embodiment will be set forth in the description which follows, and in part will be apparent from the description. The objectives and other advantages of the invention will be realized and attained by the structure particularly pointed out in the exemplary embodiments in the written description and claims hereof as well as the appended drawings.

It is to be understood that both the foregoing general description and the following detailed description are exemplary and explanatory and are intended to provide further explanation of the invention as claimed.

### Brief Description of the Drawings

Non-limiting embodiments of the present disclosure are described by way of example with reference to the accompanying figures which are schematic and are not intended to be drawn to scale. Unless indicated as representing the background art, the figures represent aspects of the disclosure.
**FIG. 1** illustrates a system overview, according to an exemplary example.
**FIG. 2** illustrates steps of wireless power transmission, according to an exemplary example.
**FIG. 3** illustrates an architecture for wireless power transmission, according to an exemplary example.
**FIG. 4** illustrates components of a system of wireless power transmission using pocket-forming procedures, according to an exemplary example.
**FIG. 5** illustrates steps of powering a plurality of receiver devices, according to an exemplary example.
**FIG. 6A** illustrates waveforms for wireless power transmission with selective range, which may get unified in single waveform.
**FIG. 6B** illustrates waveforms for wireless power transmission with selective range, which may get unified in single waveform.
**FIG. 7** illustrates wireless power transmission with selective range, where a plurality of pockets of energy may be generated along various radii from transmitter.
**FIG. 8** illustrates wireless power transmission with selective range, where a plurality of pockets of energy may be generated along various radii from transmitter.
**FIGS**. **9A** and **9B** illustrate a diagram of an architecture for wirelessly charging client computing platform, according to an exemplary example.
**FIG. 10A** illustrates wireless power transmission using multiple pocket-forming, according to an exemplary example.
**FIG. 10B** illustrates multiple adaptive pocket-forming, according to an exemplary example.
**FIG. 11** shows a wireless power system using a wireless power transmitter manager, according to an **example**.
**FIG. 12** illustrates a system architecture for smart registration of wireless power receivers within a wireless power network, according to another example.
**FIG. 13** is a flowchart of a method for smart registration of wireless power receivers within a wireless power network, according to a further example.
**FIG. 14** illustrates a transmitter communications transition, between one wireless power transmitter manager to another, in a wireless power transmission system, according to an example.
**FIG. 15** is a flowchart of transmitter communications transition, between one wireless power transmitter manager to another, in a wireless power transmission system, according to an example.
**FIG. 16** is an exemplary embodiment of transmitter communications transition, between one wireless power transmitter manager to another, in a wireless power transmission system, according to an example.
**FIG. 17** is a flowchart of a method for managing communications within a cluster of wireless power transmitters, and for managing wireless power transmission of the cluster with a wireless power receiver, according to an example.
**FIG. 18** is a schematic diagram of a wireless power receiver moving between several wireless power transmitters in a wireless power transmission system, according to an example.
**FIG. 19** illustrates a system architecture for a wireless power transmission system, and schematic diagram of communications of a cluster of wireless power transmitters, according to an embodiment.
**FIG. 20** is a schematic diagram of a wireless power receiver moving in proximity to the location of a cluster of wireless power transmitters in a wireless power transmission system, and a diagram of real time communications within the system, according to an embodiment.

### DETAILED DESCRIPTION

The present disclosure is here described in detail with reference to embodiments illustrated in the drawings, which form a part here. Other embodiments may be used and/or other changes may be made without departing from the spirit or scope of the present disclosure. The illustrative embodiments described in the detailed description are not meant to be limiting of the subject matter presented here. Furthermore, the various components and embodiments described herein may be combined to form additional embodiments not expressly described, without departing from the scope of the invention.

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to one skilled in the relevant art and having possession of this disclosure, are to be considered within the scope of the invention.

### I. Systems and Methods for Wireless Power Transmissions

### A. Components System Embodiment

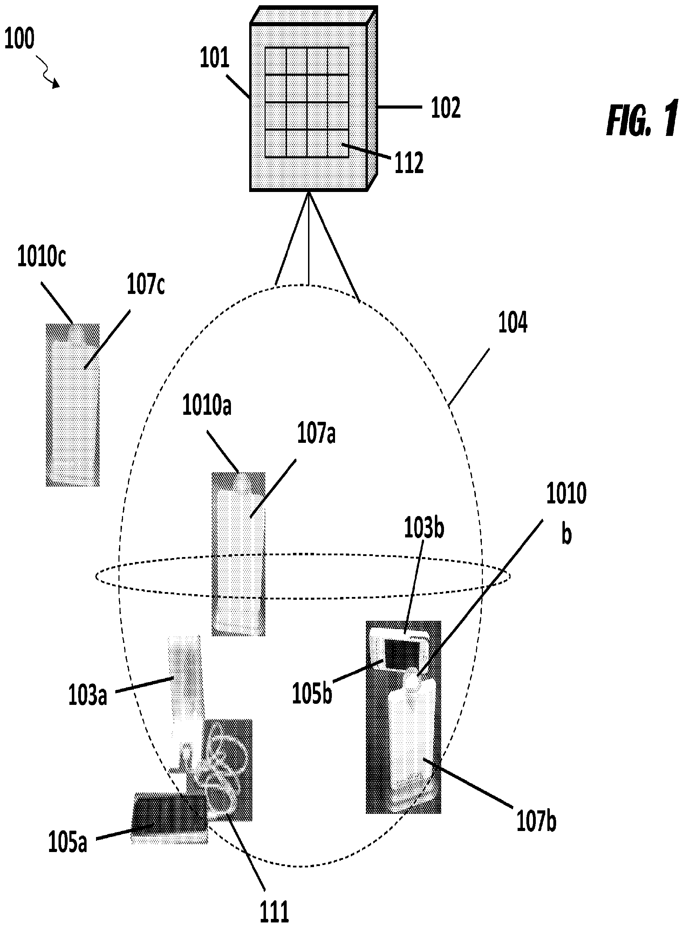

**FIG. 1** shows a system **100** for wireless power transmission by forming pockets of energy **104**. The system **100** may comprise transmitters **101**, receivers **103**, client devices **105**, and pocket detectors **107**. Transmitters **101** may transmit power transmission signals comprising power transmission waves, which may be captured by receivers **103.** The receivers **103** may comprise antennas, antenna elements, and other circuitry (detailed later), which may convert the captured waves into a useable source of electrical energy on behalf of client devices **105** associated with the receivers **103.** In some embodiments, transmitters **101** may transmit power transmission signals, made up of power transmission waves, in one or more trajectories by manipulating the phase, gain, and/or other waveform features of the power transmission waves, and/or by selecting different transmit antennas. In such embodiments, the transmitters **101** may manipulate the trajectories of the power transmission signals so that the underlying power transmission waves converge at a location in space, resulting in certain forms of interference. One type of interference generated at the convergence of the power transmission waves, "constructive interference," may be a field of energy caused by the convergence of the power transmission waves such that they add together and strengthen the energy concentrated at that location - in contrast to adding together in a way to subtract from each other and diminish the energy concentrated at that location, which is called "destructive interference". The accumulation of sufficient energy at the constructive interference may establish a field of energy, or "pocket of energy" **104**, which may be harvested by the antennas of a receiver **103**, provided the antennas are configured to operate on the frequency of the power transmission signals. Accordingly, the power transmission waves establish pockets of energy **104** at the location in space where the receivers **103** may receive, harvest, and convert the power transmission waves into useable electrical energy, which may power or charge associated electrical client devices **105**. Detectors **107** may be devices comprising a receiver **103** that are capable of producing a notification or alert in response to receiving power transmission signals. As an example, a user searching for the optimal placement of a receiver **103** to charge the user's client device **105** may use a detector **107** that comprises an LED light **108**, which may brighten when the detector **107** captures the power transmission signals from a single beam or a pocket of energy 104.

### 1. Transmitters

The transmitter **101** may transmit or broadcast power transmission signals to a receiver **103** associated with a device **105**. Although several of the embodiments mentioned below describe the power transmission signals as radio frequency (RF) waves, it should be appreciated that the power transmission may be physical media that is capable of being propagated through space, and that is capable of being converted into a source of electrical energy **103**. The transmitter **101** may transmit the power transmission signals as a single beam directed at the receivers **103**. In some cases, one or more transmitters **101** may transmit a plurality of power transmission signals that are propagated in a multiple directions and may deflect off of physical obstructions (e.g., walls). The plurality of power transmission signals may converge at a location in a three-dimensional space, forming a pocket of energy **104**. Receivers **103** within the boundaries of an energy pocket **104** may capture and covert the power transmission signals into a useable source of energy. The transmitter **101** may control pocket-forming based on phase and/or relative amplitude adjustments of power transmission signals, to form constructive interference patterns.

Although the exemplary embodiment recites the use of RF wave transmission techniques, the wireless charging techniques should not be limited to RF wave transmission techniques. Rather, it should be appreciated that possible wireless charging techniques may include any number of alternative or additional techniques for transmitting energy to a receiver converting the transmitted energy to electrical power. Non-limiting exemplary transmission techniques for energy that can be converted by a receiving device into electrical power may include: ultrasound, microwave, resonant and inductive magnetic fields, laser light, infrared, or other forms of electromagnetic energy. In the case of ultrasound, for example, one or more transducer elements may be disposed so as to form a transducer array that transmits ultrasound waves toward a receiving device that receives the ultrasound waves and converts them to electrical power. In the case of resonant or inductive magnetic fields, magnetic fields are created in a transmitter coil and converted by a receiver coil into electrical power. In addition, although the exemplary transmitter **101** is shown as a single unit comprising potentially multiple transmitters (transmit array), both for RF transmission of power and for other power transmission methods mentioned in this paragraph, the transmit arrays can comprise multiple transmitters that are physically spread around a room rather than being in a compact regular structure. The transmitter includes an antenna array where the antennas are used for sending the power transmission signal. Each antenna sends power transmission waves where the transmitter applies a different phase and amplitude to the signal transmitted from different antennas. Similar to the formation of pockets of energy, the transmitter can form a phased array of delayed versions of the signal to be transmitted, then applies different amplitudes to the delayed versions of the signal, and then sends the signals from appropriate antennas. For a sinusoidal waveform, such as an RF signal, ultrasound, microwave, or others, delaying the signal is similar to applying a phase shift to the signal.

### 2. Pockets of Energy

A pocket of energy **104** may be formed at locations of constructive interference patterns of power transmission signals transmitted by the transmitter **101**. The pockets of energy **104** may manifest as a three-dimensional field where energy may be harvested by receivers **103** located within the pocket of energy **104**. The pocket of energy **104** produced by transmitters **101** during pocket-forming may be harvested by a receiver **103**, converted to an electrical charge, and then provided to electronic client device **105** associated with the receiver **103** (e.g., laptop computer, smartphone, rechargeable battery). In some embodiments, there may be multiple transmitters **101** and/or multiple receivers **103** powering various client devices **105**. In some embodiments, adaptive pocket-forming may adjust transmission of the power transmission signals in order to regulate power levels and/or identify movement of the devices **105**.

### 3. Receivers

A receiver **103** may be used for powering or charging an associated client device **105**, which may be an electrical device coupled to or integrated with the receiver **103**. The receiver **103** may receive power transmission waves from one or more power transmission signals originating from one or more transmitters **101**. The receiver **103** may receive the power transmission signals as a single beam produced by the transmitter **101**, or the receiver **103** may harvest power transmission waves from a pocket of energy **104**, which may be a three-dimensional field in space resulting from the convergence of a plurality of power transmission waves produced by one or more transmitters **101**. The receiver **103** may comprise an array of antennas **112** configured to receive power transmission waves from a power transmission signal and harvest the energy from the power transmission signals of the single beam or pocket of energy **104**. The receiver **103** may comprise circuitry that then converts the energy of the power transmission signals (e.g., the radio frequency electromagnetic radiation) to electrical energy. A rectifier of the receiver **103** may translate the electrical energy from AC to DC. Other types of conditioning may be applied, as well. For example, a voltage conditioning circuit may increase or decrease the voltage of the electrical energy as required by the client device **105**. An electrical relay may then convey the electrical energy from the receiver **103** to the client device **105**.

In some embodiments, the receiver **103** may comprise a communications component that transmits control signals to the transmitter **101** in order to exchange data in real-time or near real-time. The control signals may contain status information about the client device **105**, the receiver **103**, or the power transmission signals. Status information may include, for example, present location information of the device **105**, amount of charge received, amount of charged used, and user account information, among other types of information. Further, in some applications, the receiver **103** including the rectifier that it contains may be integrated into the client device **105**. For practical purposes, the receiver **103**, wire **111**, and client device **105** may be a single unit contained in a single packaging.

### 4. Control Signals

In some embodiments, control signals may serve as data inputs used by the various antenna elements responsible for controlling production of power transmission signals and/or pocket-forming. Control signals may be produced by the receiver **103** or the transmitter **101** using an external power supply (not shown) and a local oscillator chip (not shown), which in some cases may include using a piezoelectric material. Control signals may be RF waves or any other communication medium or protocol capable of communicating data between processors, such as Bluetooth^{®}, RFID, infrared, near-field communication (NFC). As detailed later, control signals may be used to convey information between the transmitter **101** and the receiver **103** used to adjust the power transmission signals, as well as contain information related to status, efficiency, user data, power consumption, billing, geo-location, and other types of information.

### 5. Detectors

A detector **107** may comprise hardware similar to receivers **103**, which may allow the detector **107** to receive power transmission signals originating from one or more transmitters **101**. The detector **107** may be used by users to identify the location of pockets of energy **104**, so that users may determine the preferable placement of a receiver **103**. In some embodiments, the detector **107** may comprise an indicator light **108** that indicates when the detector is placed within the pocket of energy **104**. As an example, in **FIG. 1**, detectors **107a**, **107b** are located within the pocket of energy **104** generated by the transmitter **101**, which may trigger the detectors **107a**, **107b** to turn on their respective indicator lights **108a**, **108b**, because the detectors **107a**, **107b** are receiving power transmission signals of the pocket of energy **104**; whereas, the indicator light **108c** of a third detector **107c** located outside of the pockets of energy 104, is turned off, because the third detector **107c** is not receiving the power transmission signals from the transmitter **101**. It should be appreciated that the functions of a detector, such as the indicator light, may be integrated into a receiver or into a client device in alternative embodiments as well.

### 6. Client Device

A client device **105** may be any electrical device that requires continuous electrical energy or that requires power from a battery. Non-limiting examples of client devices **105** may include laptops, mobile phones, smartphones, tablets, music players, toys, batteries, flashlights, lamps, electronic watches, cameras, gaming consoles, appliances, GPS devices, and wearable devices or so-called "wearables" (e.g., fitness bracelets, pedometers, smartwatch), among other types of electrical devices.

In some embodiments, the client device **105a** may be a physical device distinct from the receiver **103a** associated with the client device **105a**. In such embodiments, the client device **105a** may be connected to the receiver over a wire **111** that conveys converted electrical energy from the receiver **103a** to the client device **105a**. In some cases, other types of data may be transported over the wire **111**, such as power consumption status, power usage metrics, device identifiers, and other types of data.

In some embodiments, the client device **105b** may be permanently integrated or detachably coupled to the receiver **103b,** thereby forming a single integrated product or unit. As an example, the client device **105b** may be placed into a sleeve that has embedded receivers **103b** and that may detachably couple to the device's **105b** power supply input, which may be typically used to charge the device's **105b** battery. In this example, the device **105b** may be decoupled from the receiver, but may remain in the sleeve regardless of whether or not the device **105b** requires an electrical charge or is being used. In another example, in lieu of having a battery that holds a charge for the device **105b**, the device **105b** may comprise an integrated receiver **105b**, which may be permanently integrated into the device **105b** so as to form an indistinct product, device, or unit. In this example, the device **105b** may rely almost entirely on the integrated receiver **103b** to produce electrical energy by harvesting pockets of energy **104**. It should be clear to someone skilled in the art that the connection between the receiver **103** and the client device **105** may be a wire **111** or may be an electrical connection on a circuit board or an integrated circuit, or even a wireless connection, such as inductive or magnetic.

### B. Method of Wireless Power Transmission

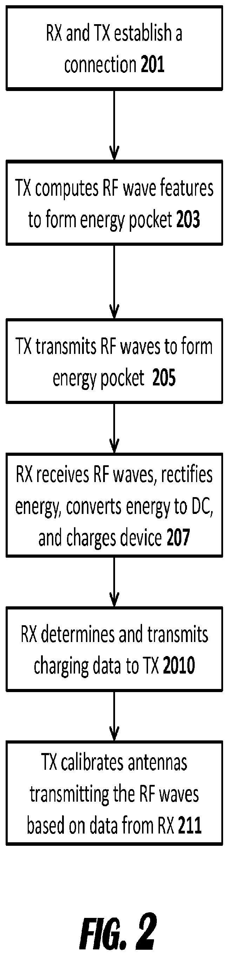

**FIG. 2** shows steps of wireless power transmission, according to an exemplary method **200** embodiment.

In a first step **201**, a transmitter (TX) establishes a connection or otherwise associates with a receiver (RX). That is, in some embodiments, transmitters and receivers may communicate control data over using a wireless communication protocol capable of transmitting information between two processors of electrical devices (e.g., Bluetooth^{®}, Bluetooth Low Energy (BLE), Wi-Fi, NFC, ZigBee^{®}). For example, in embodiments implementing Bluetooth^{®} or Bluetooth^{®} variants, the transmitter may scan for receiver's broadcasting advertisement signals or a receiver may transmit an advertisement signal to the transmitter. The advertisement signal may announce the receiver's presence to the transmitter, and may trigger an association between the transmitter and the receiver. As described herein, in some embodiments, the advertisement signal may communicate information that may be used by various devices (e.g., transmitters, client devices, sever computers, other receivers) to execute and manage pocket-forming procedures. Information contained within the advertisement signal may include a device identifier (e.g., MAC address, IP address, UUID), the voltage of electrical energy received, client device power consumption, and other types of data related to power transmission. The transmitter may use the advertisement signal transmitted to identify the receiver and, in some cases, locate the receiver in a two-dimensional space or in a three-dimensional space. Once the transmitter identifies the receiver, the transmitter may establish the connection associated in the transmitter with the receiver, allowing the transmitter and receiver to communicate control signals over a second channel.

In a next step **203**, the transmitter may use the advertisement signal to determine a set of power transmission signal features for transmitting the power transmission signals, to then establish the pockets of energy. Non-limiting examples of features of power transmission signals may include phase, gain, amplitude, magnitude, and direction among others. The transmitter may use information contained in the receiver's advertisement signal, or in subsequent control signals received from the receiver, to determine how to produce and transmit the power transmission signals so that the receiver may receive the power transmission signals. In some cases, the transmitter may transmit power transmission signals in a way that establishes a pocket of energy, from which the receiver may harvest electrical energy. In some embodiments, the transmitter may comprise a processor executing software modules capable of automatically identifying the power transmission signal features needed to establish a pocket of energy based on information received from the receiver, such as the voltage of the electrical energy harvested by the receiver from the power transmission signals. It should be appreciated that in some embodiments, the functions of the processor and/or the software modules may be implemented in an Application Specific Integrated Circuit (ASIC).

Additionally or alternatively, in some embodiments, the advertisement signal or subsequent signal transmitted by the receiver over a second communications channel may indicate one or more power transmission signals features, which the transmitter may then use to produce and transmit power transmission signals to establish a pocket of energy. For example, in some cases the transmitter may automatically identify the phase and gain necessary for transmitting the power transmission signals based on the location of the device and the type of device or receiver; and, in some cases, the receiver may inform the transmitter the phase and gain for effectively transmitting the power transmission signals.

In a next step **205**, after the transmitter determines the appropriate features to use when transmitting the power transmission signals, the transmitter may begin transmitting power transmission signals, over a separate channel from the control signals. Power transmission signals may be transmitted to establish a pocket of energy. The transmitter's antenna elements may transmit the power transmission signals such that the power transmission signals converge in a two-dimensional or three-dimensional space around the receiver. The resulting field around the receiver forms a pocket of energy from which the receiver may harvest electrical energy. One antenna element may be used to transmit power transmission signals to establish two-dimensional energy transmissions; and in some cases, a second or additional antenna element may be used to transmit power transmission signals in order to establish a three-dimensional pocket of energy. In some cases, a plurality of antenna elements may be used to transmit power transmission signals in order to establish the pocket of energy. Moreover, in some cases, the plurality of antennas may include all of the antennas in the transmitter; and, in some cases, the plurality of antennas may include a number of the antennas in the transmitter, but fewer than all of the antennas of the transmitter.

As previously mentioned, the transmitter may produce and transmit power transmission signals, according to a determined set of power transmission signal features, which may be produced and transmitted using an external power source and a local oscillator chip comprising a piezoelectric material. The transmitter may comprise an RFIC that controls production and transmission of the power transmission signals based on information related to power transmission and pocket-forming received from the receiver. This control data may be communicated over a different channel from the power transmission signals, using wireless communications protocols, such as BLE, NFC, or ZigBee^{®}. The RFIC of the transmitter may automatically adjust the phase and/or relative magnitudes of the power transmission signals as needed. Pocket-forming is accomplished by the transmitter transmitting the power transmission signals in a manner that forms constructive interference patterns.

Antenna elements of the transmitter may use concepts of wave interference to determine certain power transmission signals features (e.g., direction of transmission, phase of power transmission signal wave), when transmitting the power transmission signals during pocket-forming. The antenna elements may also use concepts of constructive interference to generate a pocket of energy, but may also utilize concepts of deconstructive interference to generate a transmission null in a particular physical location.

In some embodiments, the transmitter may provide power to a plurality of receivers using pocket-forming, which may require the transmitter to execute a procedure for multiple pocket-forming. A transmitter comprising a plurality of antenna elements may accomplish multiple pocket-forming by automatically computing the phase and gain of power transmission signal waves, for each antenna element of the transmitter tasked with transmitting power transmission signals the respective receivers. The transmitter may compute the phase and gains independently, because multiple wave paths for each power transmission signal may be generated by the transmitter's antenna elements to transmit the power transmission signals to the respective antenna elements of the receiver.

As an example of the computation of phase/gain adjustments for two antenna elements of the transmitter transmitting two signals, say X and Y where Y is 180 degree phase shifted version of X (Y = - X). At a physical location where the cumulative received waveform is X-Y, a receiver receives X-Y = X+X = 2X, whereas at a physical location where the cumulative received waveform is X+Y, a receiver receives X+Y = X-X = 0.

In a next step **207**, the receiver may harvest or otherwise receive electrical energy from power transmission signals of a single beam or a pocket of energy. The receiver may comprise a rectifier and AC/DC converter, which may convert the electrical energy from AC current to DC current, and a rectifier of the receiver may then rectify the electrical energy, resulting in useable electrical energy for a client device associated with the receiver, such as a laptop computer, smartphone, battery, toy, or other electrical device. The receiver may utilize the pocket of energy produced by the transmitter during pocket-forming to charge or otherwise power the electronic device.

In next step **209**, the receiver may generate control data containing information indicating the effectiveness of the single beam or energy pockets providing the receiver power transmission signals. The receiver may then transmit control signals containing the control data, to the transmitter. The control signals may be transmitted intermittently, depending on whether the transmitter and receiver are communicating synchronously (i.e., the transmitter is expecting to receive control data from the receiver). Additionally, the transmitter may continuously transmit the power transmission signals to the receiver, irrespective of whether the transmitter and receiver are communicating control signals. The control data may contain information related to transmitting power transmission signals and/or establishing effective pockets of energy. Some of the information in the control data may inform the transmitter how to effectively produce and transmit, and in some cases adjust, the features of the power transmission signals. Control signals may be transmitted and received over a second channel, independent from the power transmission signals, using a wireless protocol capable of transmitting control data related to power transmission signals and/or pocket-forming, such as BLE, NFC, Wi-Fi, or the like.

As mentioned, the control data may contain information indicating the effectiveness of the power transmission signals of the single beam or establishing the pocket of energy. The control data may be generated by a processor of the receiver monitoring various aspects of receiver and/or the client device associated with the receiver. The control data may be based on various types of information, such as the voltage of electrical energy received from the power transmission signals, the quality of the power transmission signals reception, the quality of the battery charge or quality of the power reception, and location or motion of the receiver, among other types of information useful for adjusting the power transmission signals and/or pocket-forming.

In some embodiments, a receiver may determine the amount of power being received from power transmission signals transmitted from the transmitter and may then indicate that the transmitter should "split" or segment the power transmission signals into less-powerful power transmission signals. The less-powerful power transmission signals may be bounced off objects or walls nearby the device, thereby reducing the amount of power being transmitted directly from the transmitter to the receiver.

In a next step **211**, the transmitter may calibrate the antennas transmitting the power transmission signals, so that the antennas transmit power transmission signals having a more effective set of feature (e.g., direction, phase, gain, amplitude). In some embodiments, a processor of the transmitter may automatically determine more effective features for producing and transmitting the power transmission signals based on a control signal received from the receiver. The control signal may contain control data, and may be transmitted by the receiver using any number of wireless communication protocols (e.g., BLE, Wi-Fi, ZigBee^{®}). The control data may contain information expressly indicating the more effective features for the power transmission waves; or the transmitter may automatically determine the more effective features based on the waveform features of the control signal (e.g., shape, frequency, amplitude). The transmitter may then automatically reconfigure the antennas to transmit recalibrated power transmission signals according to the newly determined more-effective features. For example, the processor of the transmitter may adjust gain and/or phase of the power transmission signals, among other features of power transmission feature, to adjust for a change in location of the receiver, after a user moved the receiver outside of the three-dimensional space where the pocket of energy is established.

### C. System Architecture of Power Transmission System

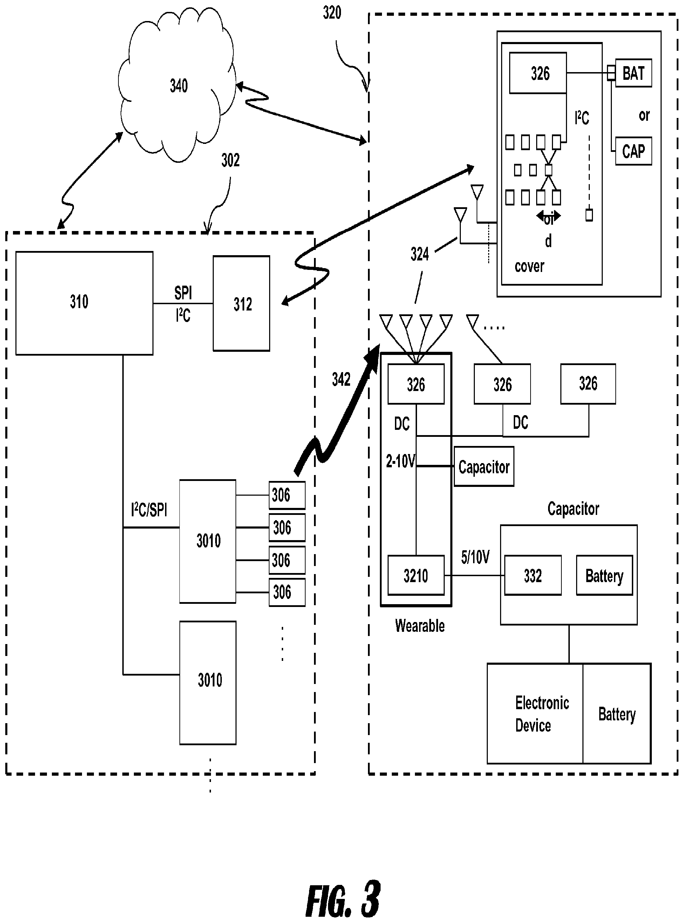

**FIG. 3** illustrates an architecture **300** for wireless power transmission using pocket-forming, according to an exemplary embodiment. "Pocket-forming" may refer to generating two or more power transmission waves **342** that converge at a location in three-dimensional space, resulting in constructive interference patterns at that location. A transmitter **302** may transmit and/or broadcast controlled power transmission waves **342** (e.g., microwaves, radio waves, ultrasound waves) that may converge in three-dimensional space. These power transmission waves **342** may be controlled through phase and/or relative amplitude adjustments to form constructive interference patterns (pocket-forming) in locations where a pocket of energy is intended. It should be understood also that the transmitter can use the same principles to create destructive interference in a location thereby creating a transmission null - a location where transmitted power transmission waves cancel each other out substantially and no significant energy can be collected by a receiver. In typical use cases the aiming of a power transmission signal at the location of the receiver is the objective; and in other cases it may be desirable to specifically avoid power transmission to a particular location; and in other cases it may be desirable to aim power transmission signal at a location while specifically avoiding transmission to a second location at the same time. The transmitter takes the use case into account when calibrating antennas for power transmission.

Antenna elements **306** of the transmitter **302** may operate in single array, pair array, quad array, or any other suitable arrangement that may be designed in accordance with the desired application. Pockets of energy may be formed at constructive interference patterns where the power transmission waves **342** accumulate to form a three-dimensional field of energy, around which one or more corresponding transmission null in a particular physical location may be generated by destructive interference patterns. Transmission null in a particular physical location-may refer to areas or regions of space where pockets of energy do not form because of destructive interference patterns of power transmission waves **342.**

A receiver **320** may then utilize power transmission waves **342** emitted by the transmitter **302** to establish a pocket of energy, for charging or powering an electronic device **313**, thus effectively providing wireless power transmission. Pockets of energy may refer to areas or regions of space where energy or power may accumulate in the form of constructive interference patterns of power transmission waves **342**. In other situations there can be multiple transmitters **302** and/or multiple receivers **320** for powering various electronic equipment for example smartphones, tablets, music players, toys and others at the same time. In other embodiments, adaptive pocket-forming may be used to regulate power on electronic devices. Adaptive pocket-forming may refer to dynamically adjusting pocket-forming to regulate power on one or more targeted receivers.

Receiver **320** may communicate with transmitter **302** by generating a short signal through antenna elements **324** in order to indicate its position with respect to the transmitter **302**. In some embodiments, receiver **320** may additionally utilize a network interface card (not shown) or similar computer networking component to communicate through a network **340** with other devices or components of the system **300**, such as a cloud computing service that manages several collections of transmitters **302**. The receiver **320** may comprise circuitry **308** for converting the power transmission signals **342** captured by the antenna elements **324**, into electrical energy that may be provided to and electric device **313** and/or a battery of the device **315**. In some embodiments, the circuitry may provide electrical energy to a battery of receiver **335**, which may store energy without the electrical device **313** being communicatively coupled to the receiver **320**.

Communications components **324** may enable receiver **320** to communicate with the transmitter **302** by transmitting control signals **345** over a wireless protocol. The wireless protocol can be a proprietary protocol or use a conventional wireless protocol, such as Bluetooth^{®}, BLE, Wi-Fi, NFC, ZigBee, and the like. Communications component **324** may then be used to transfer information, such as an identifier for the electronic device **313**, as well as battery level information, geographic location data, or other information that may be of use for transmitter **302** in determining when to send power to receiver **320**, as well as the location to deliver power transmission waves **342** creating pockets of energy. In other embodiments, adaptive pocket-forming may be used to regulate power provided to electronic devices **313**. In such embodiments, the communications components **324** of the receiver may transmit voltage data indicating the amount of power received at the receiver **320**, and/or the amount of voltage provided to an electronic device **313b** or battery **315**.

Once transmitter **302** identifies and locates receiver **320,** a channel or path for the control signals **345** can be established, through which the transmitter **302** may know the gain and phases of the control signals **345** coming from receiver **320**. Antenna elements 306 of the transmitter **302** may start to transmit or broadcast controlled power transmission waves **342** (e.g., radio frequency waves, ultrasound waves), which may converge in three-dimensional space by using at least two antenna elements **306** to manipulate the power transmission waves **342** emitted from the respective antenna element **306**. These power transmission waves **342** may be produced by using an external power source and a local oscillator chip using a suitable piezoelectric material. The power transmission waves **342** may be controlled by transmitter circuitry **301**, which may include a proprietary chip for adjusting phase and/or relative magnitudes of power transmission waves **342**. The phase, gain, amplitude, and other waveform features of the power transmission waves **342** may serve as inputs for antenna element **306** to form constructive and destructive interference patterns (pocket-forming). In some implementations, a micro-controller **310** or other circuit of the transmitter **302** may produce a power transmission signal, which comprises power transmission waves **342**, and that may be may split into multiple outputs by transmitter circuitry **301**, depending on the number of antenna elements **306** connected to the transmitter circuitry **301**. For example, if four antenna elements **306a-d** are connected to one transmitter circuit **301a**, the power transmission signal will be split into four different outputs each output going to an antenna element **306** to be transmitted as power transmission waves **342** originating from the respective antenna elements **306**.

Pocket-forming may take advantage of interference to change the directionality of the antenna element **306** where constructive interference generates a pocket of energy and destructive interference generates a transmission null. Receiver **320** may then utilize pocket of energy produced by pocket-forming for charging or powering an electronic device and therefore effectively providing wireless power transmission.

Multiple pocket-forming may be achieved by computing the phase and gain from each antenna **306** of transmitter **302** to each receiver **320.**

### D. Components of Systems Forming Pockets of Energy

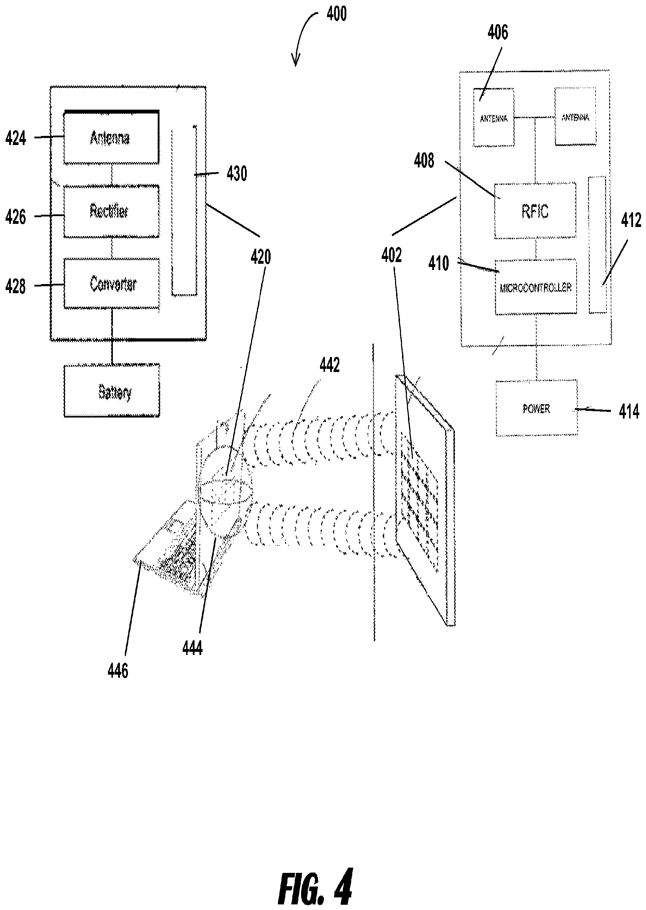

**FIG. 4** shows components of an exemplary system **400** of wireless power transmission using pocket-forming procedures. The system **400** may comprise one or more transmitters **402**, one or more receivers **420**, and one or more client devices **446**.

### 1. Transmitters

Transmitters **402** may be any device capable of broadcasting wireless power transmission signals, which may be RF waves **442**, for wireless power transmission, as described herein. Transmitters **402** may be responsible for performing tasks related to transmitting power transmission signals, which may include pocket-forming, adaptive pocket-forming, and multiple pocket-forming. In some implementations, transmitters **402** may transmit wireless power transmissions to receivers **420** in the form of RF waves, which may include any radio signal having any frequency or wavelength. A transmitter **402** may include one or more antenna elements **406**, one or more RFICs **408**, one or more microcontrollers **410**, one or more communication components **412**, a power source **414**, and a housing that may allocate all the requested components for the transmitter **402**. The various components of transmitters **402** may comprise, and/or may be manufactured using, meta-materials, micro-printing of circuits, nano-materials, and the like.

In the exemplary system **400**, the transmitter **402** may transmit or otherwise broadcast controlled RF waves **442** that converge at a location in three-dimensional space, thereby forming a pocket of energy **444**. These RF waves may be controlled through phase and/or relative amplitude adjustments to form constructive or destructive interference patterns (i.e., pocket-forming). Pockets of energy **444** may be fields formed at constructive interference patterns and may be three-dimensional in shape; whereas transmission null in a particular physical location may be generated at destructive interference patterns. Receivers **420** may harvest electrical energy from the pockets of energy **444** produced by pocket forming for charging or powering an electronic client device **446** (e.g., a laptop computer, a cell phone). In some embodiments, the system **400** may comprise multiple transmitters **402** and/or multiple receivers **420**, for powering various electronic equipment. Non-limiting examples of client devices **446** may include: smartphones, tablets, music players, toys and others at the same time. In some embodiments, adaptive pocket-forming may be used to regulate power on electronic devices.

### 2. Receivers

Receivers **420** may include a housing where at least one antenna element **424**, one rectifier **426**, one power converter **428,** and a communications component **430** may be included.

Housing of the receiver **420** can be made of any material capable of facilitating signal or wave transmission and/or reception, for example plastic or hard rubber. Housing may be an external hardware that may be added to different electronic equipment, for example in the form of cases, or can be embedded within electronic equipment as well.

### 3. Antenna Elements

Antenna elements **424** of the receiver **420** may comprise any type of antenna capable of transmitting and/or receiving signals in frequency bands used by the transmitter **402A**. Antenna elements **424** may include vertical or horizontal polarization, right hand or left hand polarization, elliptical polarization, or other polarizations, as well as any number of polarization combinations. Using multiple polarizations can be beneficial in devices where there may not be a preferred orientation during usage or whose orientation may vary continuously through time, for example a smartphone or portable gaming system. For devices having a well-defined expected orientation (e.g., a two-handed video game controller), there might be a preferred polarization for antennas, which may dictate a ratio for the number of antennas of a given polarization. Types of antennas in antenna elements **424** of the receiver **420**, may include patch antennas, which may have heights from about 1/8 inch to about 6 inches and widths from about 1/8 inch to about 6 inches. Patch antennas may preferably have polarization that depends upon connectivity, i.e., the polarization may vary depending on from which side the patch is fed. In some embodiments, the type of antenna may be any type of antenna, such as patch antennas, capable of dynamically varying the antenna polarization to optimize wireless power transmission.

### 4. Rectifier

Rectifiers **426** of the receiver **420** may include diodes, resistors, inductors, and/or capacitors to rectify alternating current (AC) voltage generated by antenna elements **424** to direct current (DC) voltage. Rectifiers **426** may be placed as close as is technically possible to antenna elements **A24B** to minimize losses in electrical energy gathered from power transmission signals. After rectifying AC voltage, the resulting DC voltage may be regulated using power converters **428.** Power converters **428** can be a DC-to-DC converter that may help provide a constant voltage output, regardless of input, to an electronic device, or as in this exemplary system **400**, to a battery. Typical voltage outputs can be from about 5 volts to about 10 volts. In some embodiments, power converter may include electronic switched mode DC-DC converters, which can provide high efficiency. In such embodiments, the receiver **420** may comprise a capacitor (not shown) that is situated to receive the electrical energy before power converters **428**. The capacitor may ensure sufficient current is provided to an electronic switching device (e.g., switch mode DC-DC converter), so it may operate effectively. When charging an electronic device, for example a phone or laptop computer, initial high-currents that can exceed the minimum voltage needed to activate operation of an electronic switched mode DC-DC converter, may be required. In such a case, a capacitor (not shown) may be added at the output of receivers **420** to provide the extra energy required. Afterwards, lower power can be provided. For example, 1/80 of the total initial power that may be used while having the phone or laptop still build-up charge.

### 5. Communications Component

A communications component **430** of a receiver **420** may communicate with one or more other devices of the system **400**, such as other receivers **420**, client devices, and/or transmitters **402**. Different antenna, rectifier or power converter arrangements are possible for a receiver as will be explained in following embodiments.

### E. Methods of Pocket Forming for a Plurality of Devices

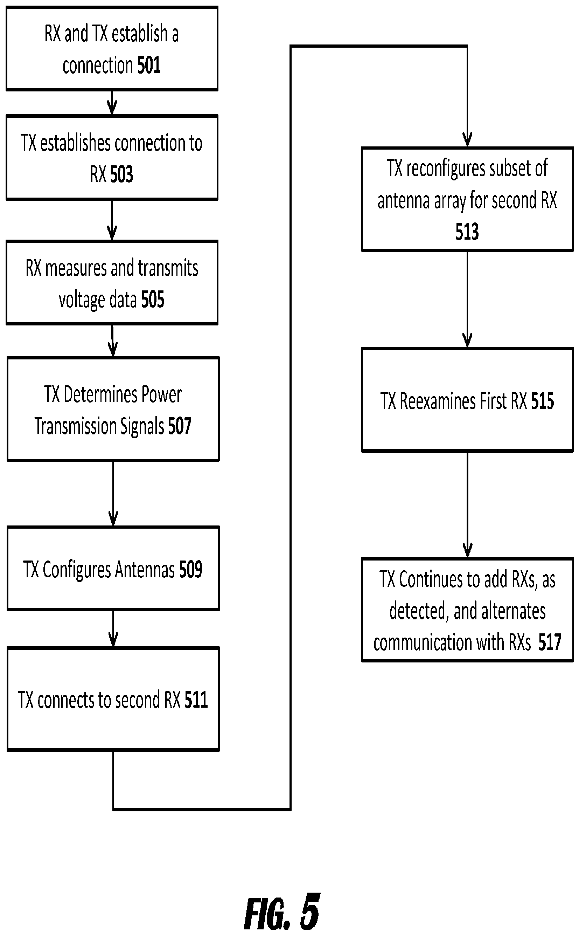

**FIG. 5** shows steps of powering a plurality of receiver devices, according to an exemplary embodiment.

In a first step **501**, a transmitter (TX) establishes a connection or otherwise associates with a receiver (RX). That is, in some embodiments, transmitters and receivers may communicate control data over using a wireless communication protocol capable of transmitting information between two processors of electrical devices (e.g., Bluetooth^{®}, BLE, Wi-Fi, NFC, ZigBee^{®}). For example, in embodiments implement Bluetooth^{®} or Bluetooth^{®} variants, the transmitter may scan for receiver's broadcasting advertisement signals or a receiver may transmit an advertisement signal to the transmitter. The advertisement signal may announce the receiver's presence to the transmitter, and may trigger an association between the transmitter and the receiver. As described later, in some embodiments, the advertisement signal may communicate information that may be used by various devices (e.g., transmitters, client devices, sever computers, other receivers) to execute and manage pocket-forming procedures. Information contained within the advertisement signal may include a device identifier (e.g., MAC address, IP address, UUID), the voltage of electrical energy received, client device power consumption, and other types of data related to power transmission waves. The transmitter may use the advertisement signal transmitted to identify the receiver and, in some cases, locate the receiver in a two-dimensional space or in a three-dimensional space. Once the transmitter identifies the receiver, the transmitter may establish the connection associated in the transmitter with the receiver, allowing the transmitter and receiver to communicate control signals over a second channel.

As an example, when a receiver comprising a Bluetooth^{®} processor is powered-up or is brought within a detection range of the transmitter, the Bluetooth processor may begin advertising the receiver according to Bluetooth^{®} standards. The transmitter may recognize the advertisement and begin establishing connection for communicating control signals and power transmission signals. In some embodiments, the advertisement signal may contain unique identifiers so that the transmitter may distinguish that advertisement and ultimately that receiver from all the other Bluetooth^{®} devices nearby within range.

In a next step **503**, when the transmitter detects the advertisement signal, the transmitter may automatically form a communication connection with that receiver, which may allow the transmitter and receiver to communicate control signals and power transmission signals. The transmitter may then command that receiver to begin transmitting real-time sample data or control data. The transmitter may also begin transmitting power transmission signals from antennas of the transmitter's antenna array.

In a next step **505**, the receiver may then measure the voltage, among other metrics related to effectiveness of the power transmission signals, based on the electrical energy received by the receiver's antennas. The receiver may generate control data containing the measured information, and then transmit control signals containing the control data to the transmitter. For example, the receiver may sample the voltage measurements of received electrical energy, for example, at a rate of 100 times per second. The receiver may transmit the voltage sample measurement back to the transmitter, 100 times a second, in the form of control signals.

In a next step **507**, the transmitter may execute one or more software modules monitoring the metrics, such as voltage measurements, received from the receiver. Algorithms may vary production and transmission of power transmission signals by the transmitter's antennas, to maximize the effectiveness of the pockets of energy around the receiver. For example, the transmitter may adjust the phase at which the transmitter's antenna transmit the power transmission signals, until that power received by the receiver indicates an effectively established pocket energy around the receiver. When an optimal configuration for the antennas is identified, memory of the transmitter may store the configurations to keep the transmitter broadcasting at that highest level.

In a next step **509**, algorithms of the transmitter may determine when it is necessary to adjust the power transmission signals and may also vary the configuration of the transmit antennas, in response to determining such adjustments are necessary. For example, the transmitter may determine the power received at a receiver is less than maximal, based on the data received from the receiver. The transmitter may then automatically adjust the phase of the power transmission signals, but may also simultaneously continues to receive and monitor the voltage being reported back from receiver.

In a next step **511**, after a determined period of time for communicating with a particular receiver, the transmitter may scan and/or automatically detect advertisements from other receivers that may be in range of the transmitter. The transmitters may establish a connection to the second receiver responsive to Bluetooth^{®} advertisements from a second receiver.

In a next step **513**, after establishing a second communication connection with the second receiver, the transmitter may proceed to adjust one or more antennas in the transmitter's antenna array. In some embodiments, the transmitter may identify a subset of antennas to service the second receiver, thereby parsing the array into subsets of arrays that are associated with a receiver. In some embodiments, the entire antenna array may service a first receiver for a given period of time, and then the entire array may service the second receiver for that period of time.

Manual or automated processes performed by the transmitter may select a subset of arrays to service the second receiver. In this example, the transmitter's array may be split in half, forming two subsets. As a result, half of the antennas may be configured to transmit power transmission signals to the first receiver, and half of the antennas may be configured for the second receiver. In the current step **513**, the transmitter may apply similar techniques discussed above to configure or optimize the subset of antennas for the second receiver. While selecting a subset of an array for transmitting power transmission signals, the transmitter and second receiver may be communicating control data. As a result, by the time that the transmitter alternates back to communicating with the first receiver and/or scan for new receivers, the transmitter has already received a sufficient amount of sample data to adjust the phases of the waves transmitted by second subset of the transmitter's antenna array, to transmit power transmission waves to the second receiver effectively.

In a next step **515**, after adjusting the second subset to transmit power transmission signals to the second receiver, the transmitter may alternate back to communicating control data with the first receiver, or scanning for additional receivers. The transmitter may reconfigure the antennas of the first subset, and then alternate between the first and second receivers at a predetermined interval.

In a next step **517**, the transmitter may continue to alternate between receivers and scanning for new receivers, at a predetermined interval. As each new receiver is detected, the transmitter may establish a connection and begin transmitting power transmission signals, accordingly.

In one exemplary embodiment, the receiver may be electrically connected to a device like a smart phone. The transmitter's processor would scan for any Bluetooth devices. The receiver may begin advertising that it's a Bluetooth device through the Bluetooth chip. Inside the advertisement, there may be unique identifiers so that the transmitter, when it scanned that advertisement, could distinguish that advertisement and ultimately that receiver from all the other Bluetooth devices nearby within range. When the transmitter detects that advertisement and notices it is a receiver, then the transmitter may immediately form a communication connection with that receiver and command that receiver to begin sending real time sample data.

The receiver would then measure the voltage at its receiving antennas, send that voltage sample measurement back to the transmitter (e.g.,100 times a second). The transmitter may start to vary the configuration of the transmit antennas by adjusting the phase. As the transmitter adjusts the phase, the transmitter monitors the voltage being sent back from the receiver. In some implementations, the higher the voltage, the more energy may be in the pocket. The antenna phases may be altered until the voltage is at the highest level and there is a maximum pocket of energy around the receiver. The transmitter may keep the antennas at the particular phase so the voltage is at the highest level.

The transmitter may vary each individual antenna, one at a time. For example, if there are 32 antennas in the transmitter, and each antenna has 8 phases, the transmitter may begin with the first antenna and would step the first antenna through all 8 phases. The receiver may then send back the power level for each of the 8 phases of the first antenna. The transmitter may then store the highest phase for the first antenna. The transmitter may repeat this process for the second antenna, and step it through 8 phases. The receiver may again send back the power levels from each phase, and the transmitter may store the highest level. Next the transmitter may repeat the process for the third antenna and continue to repeat the process until all 32 antennas have stepped through the 8 phases. At the end of the process, the transmitter may transmit the maximum voltage in the most efficient manner to the receiver.

In another exemplary embodiment, the transmitter may detect a second receiver's advertisement and form a communication connection with the second receiver. When the transmitter forms the communication with the second receiver, the transmitter may aim the original 32 antennas towards the second receiver and repeat the phase process for each of the 32 antennas aimed at the second receiver. Once the process is completed, the second receiver may getting as much power as possible from the transmitter. The transmitter may communicate with the second receiver for a second, and then alternate back to the first receiver for a predetermined period of time (e.g., a second), and the transmitter may continue to alternate back and forth between the first receiver and the second receiver at the predetermined time intervals.

In yet another implementation, the transmitter may detect a second receiver's advertisement and form a communication connection with the second receiver. First, the transmitter may communicate with the first receiver and re-assign half of the exemplary 32 the antennas aimed at the first receiver, dedicating only 16 towards the first receiver. The transmitter may then assign the second half of the antennas to the second receiver, dedicating 16 antennas to the second receiver. The transmitter may adjust the phases for the second half of the antennas. Once the 16 antennas have gone through each of the 8 phases, the second receiver may be obtaining the maximum voltage in the most efficient manner to the receiver.

### F. Wireless Power Transmission with Selective Range

### 1. Constructive Interference

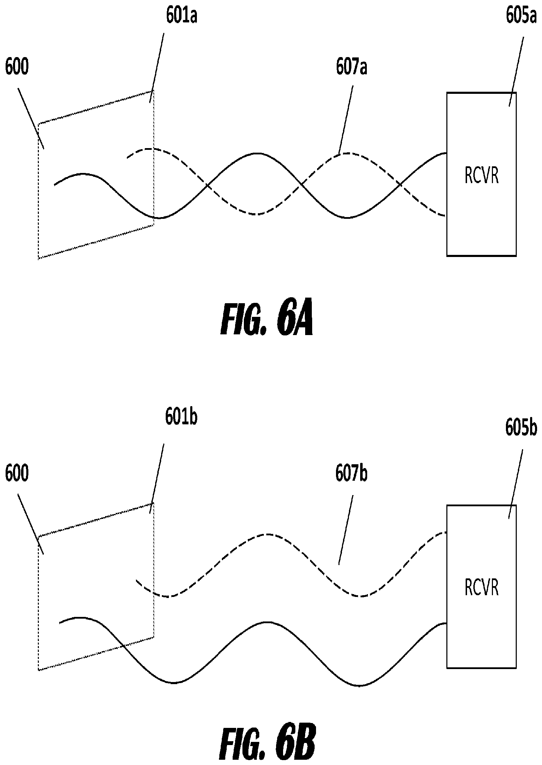

**FIG. 6A** and **FIG. 6B** show an exemplary system **600** implementing wireless power transmission principles that may be implemented during exemplary pocket-forming processes. A transmitter **601** comprising a plurality of antennas in an antenna array, may adjust the phase and amplitude, among other possible attributes, of power transmission waves **607**, being transmitted from antennas of the transmitter **601**. As shown in **FIG. 6A**, in the absence of any phase or amplitude adjustment, power transmission waves **607a** may be transmitted from each of the antennas will arrive at different locations and have different phases. These differences are often due to the different distances from each antenna element of the transmitter **601a** to a receiver **605a** or receivers **605a**, located at the respective locations.

Continuing with **FIG. 6A**, a receiver **605**a may receive multiple power transmission signals, each comprising power transmission waves **607a**, from multiple antenna elements of a transmitter **601a**; the composite of these power transmission signals may be essentially zero, because in this example, the power transmission waves add together destructively. That is, antenna elements of the transmitter **601a** may transmit the exact same power transmission signal (i.e., comprising power transmission waves **607a** having the same features, such as phase and amplitude), and as such, when the power transmission waves **607a** of the respective power transmission signals arrive at the receiver **605a**, they are offset from each other by 180 degrees. Consequently, the power transmission waves **607a** of these power transmission signals "cancel" one another. Generally, signals offsetting one another in this way may be referred to as "destructive," and thus result in "destructive interference."

In contrast, as shown in **FIG. 6B**, for so-called "constructive interference," signals comprising power transmission waves **607b** that arrive at the receiver exactly "in phase" with one another, combine to increase the amplitude of the each signal, resulting in a composite that is stronger than each of the constituent signals. In the illustrative example in **FIG. 6A**, note that the phase of the power transmission waves **607a** in the transmit signals are the same at the location of transmission, and then eventually add up destructively at the location of the receiver **605a**. In contrast, in **FIG. 6B**, the phase of the power transmission waves **607b** of the transmit signals are adjusted at the location of transmission, such that they arrive at the receiver 605b in phase alignment, and consequently they add constructively. In this illustrative example, there will be a resulting pocket of energy located around the receiver **605b** in **FIG. 6B**; and there will be a transmission null located around receiver in FIG. **6A**.

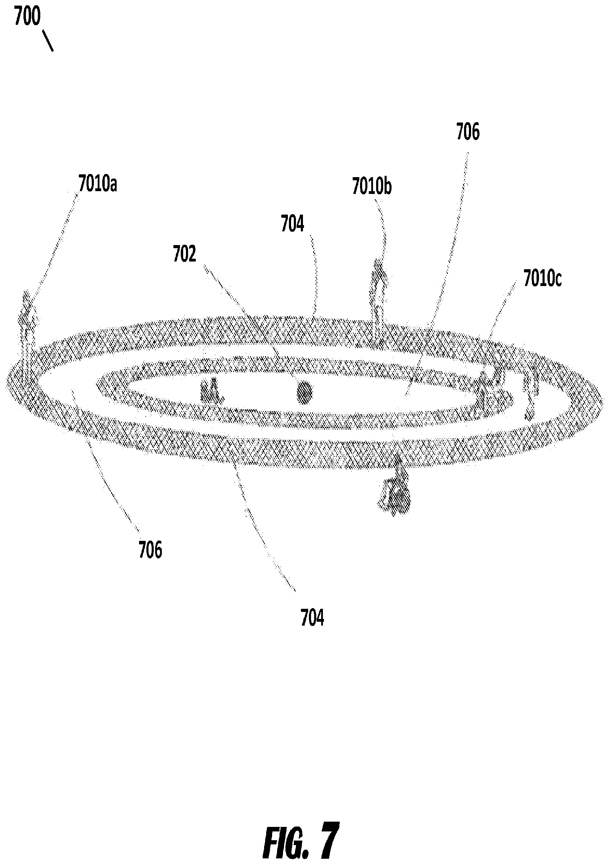

**FIG. 7** depicts wireless power transmission with selective range **700**, where a transmitter **702** may produce pocket-forming for a plurality of receivers associated with electrical devices **701**. Transmitter **702** may generate pocket-forming through wireless power transmission with selective range **700**, which may include one or more wireless charging radii **704** and one or more radii of a transmission null at a particular physical location**706**. A plurality of electronic devices **701** may be charged or powered in wireless charging radii **704**. Thus, several spots of energy may be created, such spots may be employed for enabling restrictions for powering and charging electronic devices **701**. As an example, the restrictions may include operating specific electronics in a specific or limited spot, contained within wireless charging radii **704**. Furthermore, safety restrictions may be implemented by the use of wireless power transmission with selective range **700**, such safety restrictions may avoid pockets of energy over areas or zones where energy needs to be avoided, such areas may include areas including sensitive equipment to pockets of energy and/or people which do not want pockets of energy over and/or near them. In embodiments such as the one shown in **FIG. 7**, the transmitter **702** may comprise antenna elements found on a different plane than the receivers associated with electrical devices **701** in the served area. For example the receivers of electrical devices **701** may be in a room where a transmitter **702** may be mounted on the ceiling. Selective ranges for establishing pockets of energy using power transmission waves, which may be represented as concentric circles by placing an antenna array of the transmitter **702** on the ceiling or other elevated location, and the transmitter **702** may emit power transmission waves that will generate 'cones' of energy pockets. In some embodiments, the transmitter **701** may control the radius of each charging radii **704**, thereby establishing intervals for service area to create pockets of energy that are pointed down to an area at a lower plane, which may adjust the width of the cone through appropriate selection of antenna phase and amplitudes.

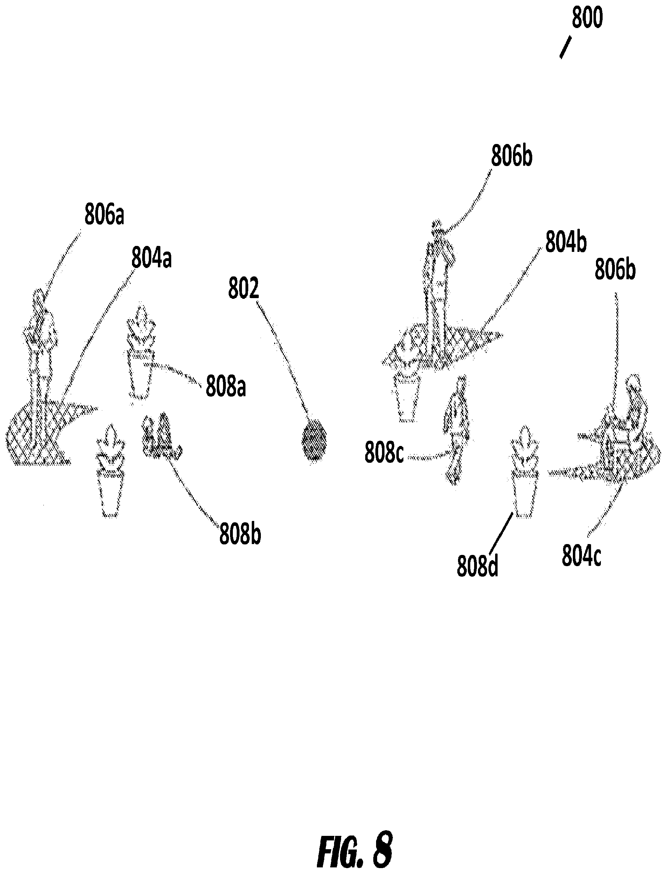

**FIG. 8** depicts wireless power transmission with selective range **800**, where a transmitter **802** may produce pocket-forming for a plurality of receivers **806**. Transmitter **802** may generate pocket-forming through wireless power transmission with selective range **800**, which may include one or more wireless charging spots **804**. A plurality of electronic devices may be charged or powered in wireless charging spots **804**. Pockets of energy may be generated over a plurality of receivers **806** regardless the obstacles **804** surrounding them. Pockets of energy may be generated by creating constructive interference, according to the principles described herein, in wireless charging spots **804**. Location of pockets of energy may be performed by tacking receivers **806** and by enabling a plurality of communication protocols by a variety of communication systems such as, Bluetooth^{®} technology, infrared communication, Wi-Fi, FM radio, among others.

### G. Exemplary System Embodiment Using Heat Maps

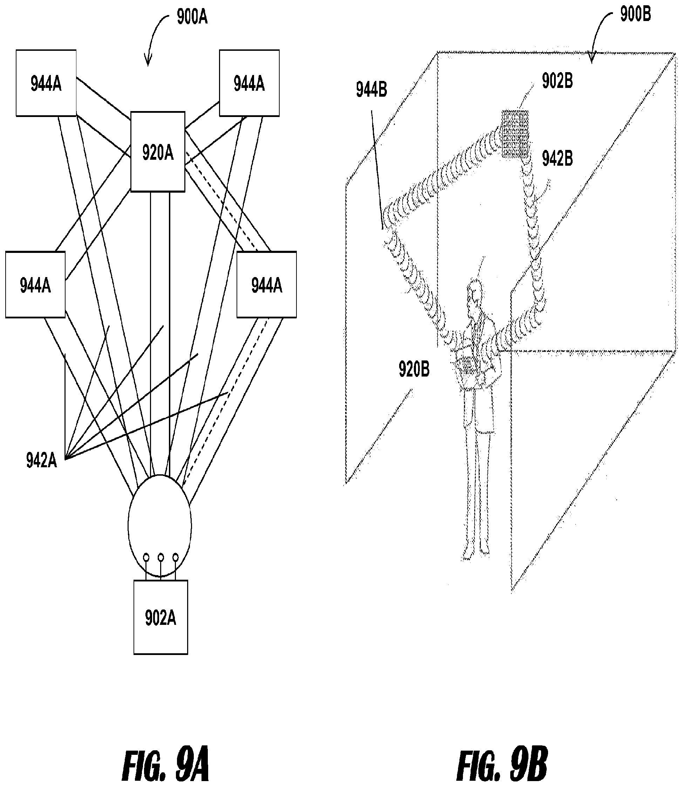

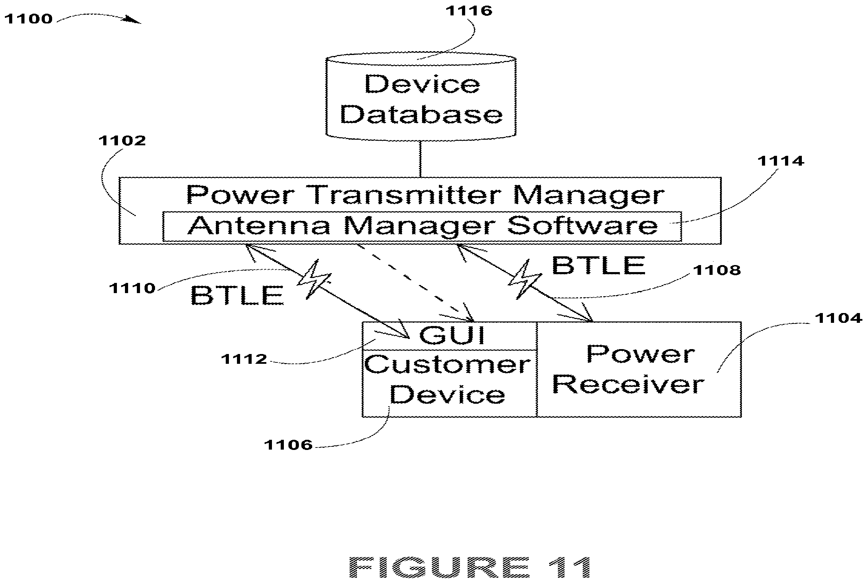

**FIGS. 9A** and **9B** illustrate a diagram of architecture **900A**, **900B** for a wirelessly charging client computing platform, according to an exemplary embodiment. In some implementations, a user may be inside a room and may hold on his hands an electronic device (e.g. a smartphone, tablet). In some implementations, electronic device may be on furniture inside the room. The electronic device may include a receiver **920A, 920B** either embedded to the electronic device or as a separate adapter connected to electronic device. Receivers **920A, 920B** may include all the components described in **FIG. 11**. A transmitter **902A, 902B** may be hanging on one of the walls of the room right behind user. Transmitters **902A, 902B** may also include all the components described in **FIG. 11**.

As user may seem to be obstructing the path between receivers **920A, 920B** and transmitters **902A, 902B,** RF waves may not be easily aimed to the receivers **920A, 920B** in a linear direction. However, since the short signals generated from receivers **920A, 920B** may be omni-directional for the type of antenna element used, these signals may bounce over the walls **944A, 944B** until they reach transmitters **902A, 902B.** A hot spot **944A, 944B** may be any item in the room which will reflect the RF waves. For example, a large metal clock on the wall may be used to reflect the RF waves to a user's cell phone.

A micro controller in the transmitter adjusts the transmitted signal from each antenna based on the signal received from the receiver. Adjustment may include forming conjugates of the signal phases received from the receivers and further adjustment of transmit antenna phases taking into account the built-in phase of antenna elements. The antenna element may be controlled simultaneously to steer energy in a given direction. The transmitter **902A, 902B** may scan the room, and look for hot spots **944A**, **944B.** Once calibration is performed, transmitters **902A, 902B** may focus RF waves in a channel following a path that may be the most efficient paths. Subsequently, RF signals **942A, 942B** may form a pocket of energy on a first electronic device and another pocket of energy in a second electronic device while avoiding obstacles such as user and furniture.

When scanning the service area, the room in **FIG. 9A** and **9B**, the transmitter **902A, 902B** may employ different methods. As an illustrative example, but without limiting the possible methods that can be used, the transmitter **902A**, **902B** may detect the phases and magnitudes of the signal coming from the receiver and use those to form the set of transmit phases and magnitudes, for example by calculating conjugates of them and applying them at transmit. As another illustrative example, the transmitter may apply all possible phases of transmit antennas in subsequent transmissions, one at a time, and detect the strength of the pocket of energy formed by each combination by observing information related to the signal from the receiver **920A, 920B.** Then the transmitter **902A, 902B** repeats this calibration periodically. In some implementations, the transmitter **902A, 902B** does not have to search through all possible phases, and can search through a set of phases that are more likely to result in strong pockets of energy based on prior calibration values. In yet another illustrative example, the transmitter **902A, 902B** may use preset values of transmit phases for the antennas to form pockets of energy directed to different locations in the room. The transmitter may for example scan the physical space in the room from top to bottom and left to right by using preset phase values for antennas in subsequent transmissions. The transmitter **902A, 902B** then detects the phase values that result in the strongest pocket of energy around the receiver **920a, 920b** by observing the signal from the receiver **920a, 920b.** It should be appreciated that there are other possible methods for scanning a service area for heat mapping that may be employed, without deviating from the scope of the embodiments described herein. The result of a scan, whichever method is used, is a heat-map of the service area (e.g., room, store) from which the transmitter **902A, 902B** may identify the hot spots that indicate the best phase and magnitude values to use for transmit antennas in order to maximize the pocket of energy around the receiver.

The transmitters **902A, 902B**, may use the Bluetooth connection to determine the location of the receivers **920A, 920B,** and may use different non-overlapping parts of the RF band to channel the RF waves to different receivers **920A, 920B**. In some implementations, the transmitters **902A, 902B**, may conduct a scan of the room to determine the location of the receivers **920A**, **920B** and forms pockets of energy that are orthogonal to each other, by virtue of non-overlapping RF transmission bands. Using multiple pockets of energy to direct energy to receivers may inherently be safer than some alternative power transmission methods since no single transmission is very strong, while the aggregate power transmission signal received at the receiver is strong.

### H. Exemplary System Embodiment

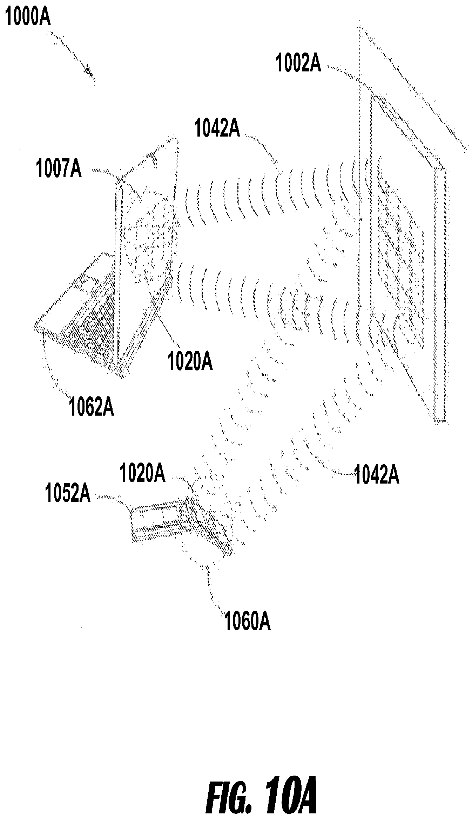

**FIG. 10A** illustrates wireless power transmission using multiple pocket-forming **1000A** that may include one transmitter **1002A** and at least two or more receivers 1020A. Receivers **1020A** may communicate with transmitters **1002A**, which is further described in **FIG. 11**. Once transmitter **1002A** identifies and locates receivers **1020A**, a channel or path can be established by knowing the gain and phases coming from receivers **1020A**. Transmitter **1002A** may start to transmit controlled RF waves **1042A** which may converge in three-dimensional space by using a minimum of two antenna elements. These RF waves **1042A** may be produced using an external power source and a local oscillator chip using a suitable piezoelectric material. RF waves **1042A** may be controlled by RFIC, which may include a proprietary chip for adjusting phase and/or relative magnitudes of RF signals that may serve as inputs for antenna elements to form constructive and destructive interference patterns (pocket-forming). Pocket-forming may take advantage of interference to change the directionality of the antenna elements where constructive interference generates a pocket of energy **1060A** and deconstructive interference generates a transmission null. Receivers **1020A** may then utilize pocket of energy **1060A** produced by pocket-forming for charging or powering an electronic device, for example, a laptop computer **1062A** and a smartphone **1052A** and thus effectively providing wireless power transmission.

Multiple pocket forming **1000A** may be achieved by computing the phase and gain from each antenna of transmitter **1002A** to each receiver **1020A**. The computation may be calculated independently because multiple paths may be generated by antenna element from transmitter **1002A** to antenna element from receivers **1020A**.

### I. Exemplary System Embodiment

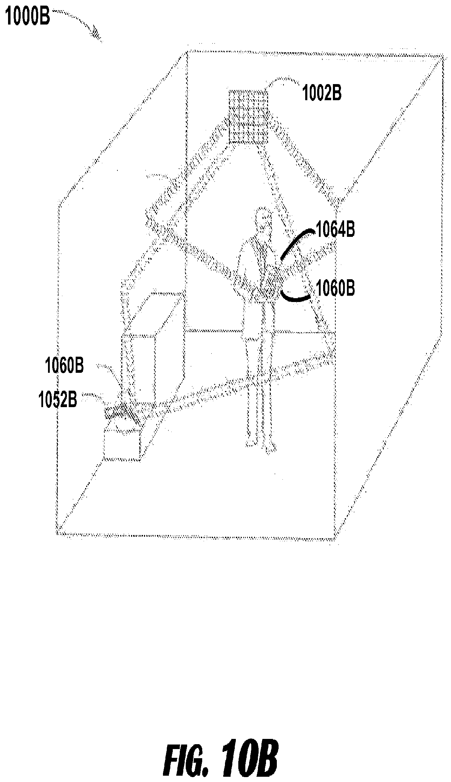

**FIG. 10B** is an exemplary illustration of multiple adaptive pocket-forming 1000B. In this embodiment, a user may be inside a room and may hold on his hands an electronic device, which in this case may be a tablet **1064B**. In addition, smartphone **1052B** may be on furniture inside the room. Tablet **1064B** and smartphone **1052B** may each include a receiver either embedded to each electronic device or as a separate adapter connected to tablet **1064B** and smartphone **1052B.** Receiver may include all the components described in **FIG. 11**. A transmitter **1002B** may be hanging on one of the walls of the room right behind user. Transmitter **1002B** may also include all the components described in **FIG. 11****.** As user may seem to be obstructing the path between receiver and transmitter **1002B**, RF waves **1042B** may not be easily aimed to each receiver in a line of sight fashion. However, since the short signals generated from receivers may be omni-directional for the type of antenna elements used, these signals may bounce over the walls until they find transmitter **1002B**. Almost instantly, a micro-controller which may reside in transmitter **1002B**, may recalibrate the transmitted signals, based on the received signals sent by each receiver, by adjusting gain and phases and forming a convergence of the power transmission waves such that they add together and strengthen the energy concentrated at that location - in contrast to adding together in a way to subtract from each other and diminish the energy concentrated at that location, which is called "destructive interference" and conjugates of the signal phases received from the receivers and further adjustment of transmit antenna phases taking into account the built-in phase of antenna elements. Once calibration is performed, transmitter **1002B** may focus RF waves following the most efficient paths. Subsequently, a pocket of energy **1060B** may form on tablet **1064B** and another pocket of energy **1060B** in smartphone **1052B** while taking into account obstacles such as user and furniture. The foregoing property may be beneficial in that wireless power transmission using multiple pocket-forming **1000B** may inherently be safe as transmission along each pocket of energy is not very strong, and that RF transmissions generally reflect from living tissue and do not penetrate.

Once transmitter **1002B** identities and locates receiver, a channel or path can be established by knowing the gain and phases coming from receiver. Transmitter **1002B** may start to transmit controlled RF waves **1042B** that may converge in three-dimensional space by using a minimum of two antenna elements. These RF waves **1042B** may be produced using an external power source and a local oscillator chip using a suitable piezoelectric material. RF waves **1042B** may be controlled by RFIC that may include a proprietary chip for adjusting phase and/or relative magnitudes of RF signals, which may serve as inputs for antenna elements to form constructive and destructive interference patterns (pocket-forming). Pocket-forming may take advantage of interference to change the directionality of the antenna elements where constructive interference generates a pocket of energy and deconstructive interference generates a null in a particular physical location.. Receiver may then utilize pocket of energy produced by pocket-forming for charging or powering an electronic device, for example a laptop computer and a smartphone and thus effectively providing wireless power transmission.

Multiple pocket-forming **1000B** may be achieved by computing the phase and gain from each antenna of transmitter to each receiver. The computation may be calculated independently because multiple paths may be generated by antenna elements from transmitter to antenna elements from receiver.

An example of the computation for at least two antenna elements may include determining the phase of the signal from the receiver and applying the conjugate of the receive parameters to the antenna elements for transmission.

In some embodiments, two or more receivers may operate at different frequencies to avoid power losses during wireless power transmission. This may be achieved by including an array of multiple embedded antenna elements in transmitter **1002B**. In one embodiment, a single frequency may be transmitted by each antenna in the array. In other embodiments some of the antennas in the array may be used to transmit at a different frequency. For example, 1/2 of the antennas in the array may operate at 2.4 GHz while the other 1/2 may operate at 5.8 GHz. In another example, 1/3 of the antennas in the array may operate at 900 MHz, another 1/3 may operate at 2.4 GHz, and the remaining antennas in the array may operate at 5.8 GHz.

In another embodiment, each array of antenna elements may be virtually divided into one or more antenna elements during wireless power transmission, where each set of antenna elements in the array can transmit at a different frequency. For example, an antenna element of the transmitter may transmit power transmission signals at 2.4 GHz, but a corresponding antenna element of a receiver may be configured to receive power transmission signals at 5.8 GHz. In this example, a processor of the transmitter may adjust the antenna element of the transmitter to virtually or logically divide the antenna elements in the array into a plurality patches that may be fed independently. As a result, 1/4 of the array of antenna elements may be able to transmit the 5.8 GHz needed for the receiver, while another set of antenna elements may transmit at 2.4 GHz. Therefore, by virtually dividing an array of antenna elements, electronic devices coupled to receivers can continue to receive wireless power transmission. The foregoing may be beneficial because, for example, one set of antenna elements may transmit at about 2.4 GHz and other antenna elements may transmit at 5.8 GHz, and thus, adjusting a number of antenna elements in a given array when working with receivers operating at different frequencies. In this example, the array is divided into equal sets of antenna elements (e.g., four antenna elements), but the array may be divided into sets of different amounts of antenna elements. In an alternative embodiment, each antenna element may alternate between select frequencies.

The efficiency of wireless power transmission as well as the amount of power that can be delivered (using pocket-forming) may be a function of the total number of antenna elements **1006** used in a given receivers and transmitters system. For example, for delivering about one watt at about 4.57m (15 feet), a receiver may include about 80 antenna elements while a transmitter may include about 256 antenna elements. Another identical wireless power transmission system (about 1 watt at about 4.57m or 15 feet) may include a receiver with about 40 antenna elements, and a transmitter with about 512 antenna elements. Reducing in half the number of antenna elements in a receiver may require doubling the number of antenna elements in a transmitter. In some embodiments, it may be beneficial to put a greater number of antenna elements in transmitters than in a receivers because of cost, because there will be much fewer transmitters than receivers in a system-wide deployment. However, the opposite can be achieved, e.g., by placing more antenna elements on a receiver than on a transmitter as long as there are at least two antenna elements in a transmitter **1002B**.

### II. Wireless Power Software Management System

### A. System and Method for Smart Registration of Wireless Power Receivers in a Wireless Power Network

**FIG. 11** shows a wireless power system **1100** using a wireless power transmitter manager **1102**, according to an embodiment. Wireless power transmitter manager **1102** may include a processor with computer-readable medium, such as a random access memory (RAM) (not shown) coupled to the processor. Examples of processor may include a microprocessor, an application specific integrated circuit (ASIC), and field programmable object array (FPOA), among others.

Wireless power transmitter manager **1102** may transmit controlled RF waves that act as power transmission signals that may converge in 3-d space to a wireless power receiver **1104** for charging or powering a customer device **1106**. Although the exemplary embodiment recites the use of RF waves as power transmission signals, the power transmission signals may include any number of alternative or additional techniques for transmitting energy to a wireless power receiver converting the transmitted energy to electrical power. These RF waves may be controlled through phase and/or relative amplitude adjustments to form constructive and destructive interference patterns (pocket-forming). Pockets of energy may form at constructive interference patterns and can be 3-dimensional in shape, whereas null-spaces may be present outside the constructive interference patterns.

Wireless power receiver **1104** may be paired with customer device **1106** or may be built into customer device **1106**. Examples of customer devices **1106** may include laptop computer, mobile device, smartphones, tablets, music players, and toys, among other. Wireless power transmitter manager **1102** may receive customer device's signal strength from advertisement emitted by wireless power receiver **1104** for the purpose of detecting if wireless power receiver **1104** is nearer to wireless power transmitter manager **1102** than to any other wireless power transmitter manager **1102** in system **1100**.

Customer device **1106** may include a graphical user interface **1112** (GUI). Graphical user interface **1112** (GUI) may receive customer device's signal strength from advertisement emitted by wireless power receiver **1104** for the purpose of detecting if wireless power receiver **1104** is paired with graphical user interface **1112** (GUI).

According to some aspects of this embodiment, wireless power transmitter manager **1102** may include a device database **1116**, where device database **1116** may store information about all network devices, such as universally unique identifier (UUID), serial number, signal strength, identification of paired partner device, customer device's power schedules and manual overrides; customer device's past and present operational status, battery level and charge status, hardware value measurements, faults, errors, and significant events; names, customer's authentication or authorization names, and configuration details running the system, among others. Device database **1116** may also stores information about all system devices such as wireless power transmitter managers, wireless power receivers, end user hand-held devices, and servers, among others

Under control of wireless power transmitter manager **1102, wireless power system 1100** may send power in a range up to 9.1m (30 feet).

Wireless power transmitter manager **1102,** with control over wireless power receiver's power record, may allow sending power to a specific wireless power receiver **1104**. In one embodiment, wireless power transmitter managers **1102** may need to fulfill two conditions to control wireless power receiver's power record in device database **1116**; customer device's signal strength threshold has to be significantly greater than 50% (for example 55%) of the signal strength measured by all other wireless power transmitter managers **1102** and has to remain significantly greater than 50% for a minimum amount of time.

Wireless power transmitter manager **1102** may use, but is not limited to, Bluetooth low energy (BLE) to establish a communication link **1108** with wireless power receiver **1104** and a control link **1110** with customer device's graphical user interface (GUI). Wireless power transmitter manager **1102** may use control link **1110** to receive commands from and receive pairing information from customer device's graphical user interface (GUI).

Wireless power transmitter manager **1102** may include antenna manager software **1114** to track customer device **1106**. Antenna manager software **1114** may use real time telemetry to read the state of the power received in customer device **1106**.

Wireless power transmitter manager **1102** may create a wireless energy area model which includes information about all the movements in the system. This information may be stored in device database **1116**.

In other situations, there can be multiple wireless power transmitter managers **2902** and/or multiple wireless power receivers **1104** for powering multiple and various customer devices **1106**.

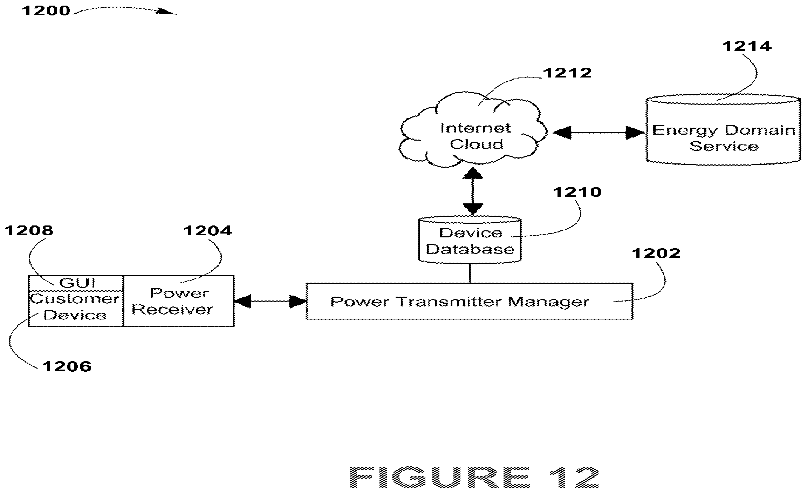

**FIG. 12** illustrates a system architecture for smart registration **1200** of wireless power receivers within a wireless power network, according to another embodiment.

In a wireless power network, one or more wireless power transmitter managers and/or one or more wireless power receivers may be used for powering various customer devices.

Each wireless power device in the wireless power network may include a universally unique identifier (UUID). Examples of wireless power devices may include wireless power transmitter manager, wireless power receiver, end user hand-held or mobile devices, and servers, among others.

A wireless power transmitter manager **1202** may include a processor with computer-readable medium, such as a random access memory (RAM) (not shown) coupled to the processor. Examples of processor may include a microprocessor, an application specific integrated circuit (ASIC), and a field programmable object array (FPOA), among others.

According to some aspects of this embodiment, each wireless power device bought by a customer may be registered at the time of purchase, or registered later by the customer using public accessible web page or smart device application that communicates to energy domain service **1214**. The device may registered with the wireless power network, via a registry stored in an energy domain service **1214**.

Energy domain service **1214** may be one or more cloud-based servers and each cloud-based servers may include a database that may store a registry for each wireless power device purchased by a customer. Cloud-based servers may be implemented through known in the art database management systems (DBMS) such as, for example, MySQL, PostgreSQL, SQLite, Microsoft SQL Server, Microsoft Access, Oracle, SAP, dBASE, FoxPro, IBM DB2, LibreOffice Base, FileMaker Pro and/or any other type of database that may organize collections of data. The registry may include customer's name, customer's credit card, Pay Pal account, or any other method of payment, address, and wireless power device UUID, among others. The registry may indicate whether wireless power transmitter manager **1202** is for business, commercial, municipal, government, military, or home use. The registry may also include different access policies for each wireless power transmitter manager **1202** , depending on it use, for example if wireless power transmitter manager **1202** will be for businesses use, the customer may need to define whether the power transfer will be charged or not.

In a different aspect of this embodiment, a wireless power receiver **1204** may include a nonvolatile memory for storing wireless power transmitter manager **1202** universally unique identifier (UUID). Examples of nonvolatile memory may include read-only memory, flash memory, ferroelectric RAM (F-RAM) hard disks, floppy disks, and optical discs, among others. Wireless power receiver **1204** may be paired with customer device **1206** or may be built into customer device **1206**. Examples of customer devices **1206** may include laptop computer, mobile device, smartphone, tablet, music player, and toys, among other. Customer device **1206** may include a graphical user interface **1208** (GUI) as part of wireless power system software downloaded and installed from public application store.

According to some aspects of this embodiment, wireless power transmitter manager **1202** may include a device database **1210**, where device database **1210** may store information about all network devices such as universally unique identifier (UUID), serial number, signal strength, identification of paired partner device, customer device's power schedules and manual overrides; customer device's past and present operational status, battery level and charge status, hardware value measurements, faults, errors, and significant events; names, customer's authentication or authorization names, and configuration details running the system, among others.

Wireless power transmitter manager **1202** may send power in a range up to 9.1m (30 feet).

According to some aspects of this embodiment, wireless power transmitter manager **1202** may detect customer device's signal strength from advertisement emitted graphical user interface **1208** (GUI) for the purpose of detecting if wireless power receiver **1204** is paired with graphical user interface **1208** (GUI). Wireless power transmitter manager **1202** may also detect if wireless power receiver **1204** is nearer to wireless power transmitter manager **1202** than to any other wireless power transmitter manager **1202** in the wireless power network through an analysis of each device database records in the wireless power system **1200**. Each record may include a list of each wireless power receiver **1204** and its signal strength relative to and detected by wireless power transmitter manager **1202**. Then wireless power receiver **1204** may be assigned to wireless power transmitter manager **1202,** which may have exclusive control and authority to change the wireless power receiver's record in distributed system device database **1210** until wireless power receiver **1204** moves to a new location closer to another wireless power transmitter manager **1202**. If wireless power receiver **1204** change to new location closer to another wireless power transmitter manager **1202,** then wireless power transmitter manager **1202** (with control over wireless power receiver **1204)** may update wireless power receiver's record with its UUID.

If wireless power receiver **1204** tries to charge using wireless power transmitter manager **1202**, then wireless power transmitter manager **1202** may verify with energy domain service **1214** if it is authorized to send power to wireless power receiver **1204**. Therefore wireless power transmitter manager **1202** may establish a communication connection with wireless power receiver **1204** to request its universally unique identifier (UUID). Wireless power receiver **1204** may send UUID to wireless power transmitter manager **1202**. Wireless power transmitter manager **1202** may establish communication connection with energy domain service **1214** and then send its UUID and wireless power receiver **1204** UUID to energy domain service **1214** through an internet cloud **1212,** where internet cloud **1212** may be any suitable connections between computers such as, for example, intranets, local area networks (LAN), virtual private networks (VPN), wide area networks (WAN) and the internet among others. Once energy domain service **1214** receives wireless power transmitter UUID and wireless power receiver **1204** UUID, it may inspect the registry for wireless power transmitter manager **1202** using UUID. Registry may include access policy for wireless power transmitter manager **1202**. Energy domain service **1214** may determine through the access policy whether wireless power transmitter manager **1202** needs to pay to receive power. If wireless power transmitter manager **1202** access policy states that wireless power receiver **1204** with UUID needs to pay to receive power, energy domain service **1214** may verify whether a credit card, Pay Pal, or other payment method, may be denoted within wireless power receiver **1204** registry. If a payment method is associated with wireless power receiver **1204**, energy domain service **1214** may send a message to wireless power transmitter manager **1202** authorizing the power transfer to wireless power receiver **1204**. Wireless power transmitter manager **1202** may report energy consumption statistics to energy domain service **1214** for subsequent billing of wireless power receiver's owner. Energy consumption statistics may be stored in device database **1210** and also may be sent to energy domain service **1214** and saved in wireless power receiver's registry.

If no payment method is associated with wireless power receiver **1204,** energy domain service **1214** may send a message to wireless power transmitter manager **1202** denying the power transfer to wireless power receiver **1204**.

In the case wireless power transmitter manager **1202** access policy states that no charge will be applied to certain wireless power receivers **1204,** then energy domain service **1214** may confirm if wireless power receiver **1204** is allowed to receive power from wireless power transmitter manager **1202**. If wireless power receiver **1204** is allowed to receive power from wireless power transmitter manager **1202**, then, energy domain service **1214** may send a message to wireless power transmitter manager **1202** authorizing the power transfer to wireless power receiver **1204**. Otherwise energy domain service **1214** may send a message to wireless power transmitter manager **1202** denying the power transfer to wireless power receiver **1204**.

According to some aspect of this embodiment, a customer, may be able to select through a GUI device, which wireless power receivers **1204** may receive charge from wireless power transmitter manager **1202**. In the GUI device, customer may be able to visualize each wireless power receiver **1204** near wireless power transmitter manager **1202**, then, customer may select which wireless power receivers **1204** are allowed to receive charge from wireless power transmitter manager **1202**. This information may be stored in device database **1210** and also may be sent to energy domain service **1214**.

In a different aspect of this embodiment, a proprietor or clerk of a commercial or retail business establishment that owns a wireless power system may be able to select through the GUI device a wireless power receiver **1204** to receive power from one or more wireless power transmitter managers **1202** within power range of wireless power receiver **1204**. The customer may be provided with a pre-authorized wireless power receiver **1204** at business establishment by proprietor or clerk. The wireless power receiver **1204** may be attached to customer's device. The proprietor or clerks may specify to GUI device the customer's method of payment (credit card, Pay Pal, cash, among others.). Immediately the wireless power transmitter manager **1202** that belong to business establishment may start sending power to the customer device that is attached to pre-authorized wireless power receiver **1204**. Customer may be billed on behalf of business establishment for power provided. Also in the GUI device, proprietor or clerk may be able to visualize power received by wireless power receiver **1204** and the amount to bill for power received. This information may be stored in distributed system device database **1210** and also may be sent to energy domain service **1214**.

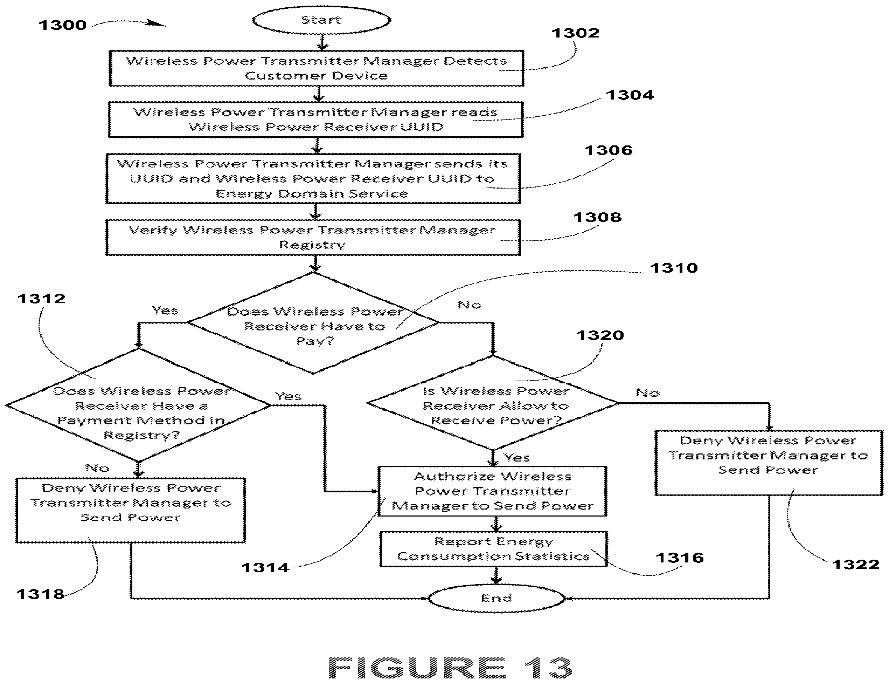

**FIG. 13** is a flowchart of a method for smart registration **1300** of wireless power receivers within a wireless power network, according to a further embodiment.

In a wireless power network, one or more wireless power transmitter managers and/or one or more wireless power receivers may be used for powering various customer devices. Each wireless power device in the wireless power network may include a universally unique identifier (UUID). Examples of wireless power devices may include wireless power transmitter manager, wireless power receiver, end user hand-held or mobile devices and servers, among others.

The method may start at step **1302** when a wireless power transmitter manager detects a customer device. Customer device may be paired with wireless power receiver or wireless power receiver may be built in a customer device. Example of customer devices may include smartphones, mobile device, tablets, music players, toys and others at the same time. Customer device may include a graphical user interface (GUI) as part of wireless power system software downloaded and installed from public application store.

Wireless power transmitter manager may detect customer device's signal strength from advertisement emitted graphical user interface (GUI) for the purpose of detecting if wireless power receiver is paired with graphical user interface (GUI). Wireless power transmitter manager may also detect if wireless power receiver is nearer to wireless power transmitter manager than to any other wireless power transmitter manager in the wireless power network through an analysis of each device database records in the wireless power system. Each record may include a list of each wireless power receiver and its signal strength relative to and detected by wireless power transmitter manager. Then wireless power receiver may be assigned to wireless power transmitter manager, which may have exclusive control and authority to change the wireless power receiver's record in distributed system device database until wireless power receiver moves to a new location closer to another wireless power transmitter manager.

According to some aspects of this embodiment, Device database may store information about all network devices such as universally unique identifier (UUID), serial number, signal strength, identification of paired partner device, customer device's power schedules and manual overrides; customer device's past and present operational status, battery level and charge status, hardware value measurements, faults, errors, and significant events; names, customer's authentication or authorization names, and configuration details running the system, among others.

Wireless power transmitter manager may establish a communication connection with wireless power receiver indicating is within range to receive charge. Wireless power transmitter manager may send power in a range up to 9.1m (30 feet).

If wireless power receiver tries to obtain charge from wireless power transmitter manager, wireless power transmitter manager may verify with energy domain service if it is authorized to send power to wireless power receiver. Therefore wireless power transmitter may establish a communication connection with wireless power receiver to request universally unique identifier (UUID). Wireless power receiver may send UUID to wireless power transmitter manager. Wireless power transmitter manager may read wireless power receiver UUID, at step **1904**.

Energy domain service may be one or more cloud-based servers and each cloud-based servers may include a database that may store a registry for each wireless power device purchased by a customer. Cloud-based servers may be implemented through known in the art database management systems (DBMS) such as, for example, MySQL, PostgreSQL, SQLite, Microsoft SQL Server, Microsoft Access, Oracle, SAP, dBASE, FoxPro, IBM DB2, LibreOffice Base, FileMaker Pro and/or any other type of database that may organize collections of data. The registry may include customer's name, customer's credit card, address, and wireless power device UUID, among others. The registry may indicate whether wireless power transmitter manager is for business, commercial, municipal, government, military, or home use. The registry may also include different access policies for each wireless power transmitter manager, depending on it use, for example if wireless power transmitter manager will be for businesses use, the customer may need to define whether the power transfer will be charged or not.

According to some aspects of this embodiment, each wireless power device bought by a customer may be registered at the time of purchase, or registered later by the customer using public accessible web page or smart device application that communicates to energy domain service.

Wireless power transmitter manager may send its UUID and also wireless power receiver UUID to an energy domain service through the internet cloud, at step **1306**. Internet cloud may be any suitable connections between computers such as, for example, intranets, local area networks (LAN), virtual private networks (VPN), wide area networks (WAN) and the internet among others.

Energy domain service may inspect the registry for wireless power transmitter manager using UUID, at step **1308**. Registry may include access policy for wireless power transmitter manager.

Energy domain service may determine through the access policy whether wireless power transmitter manager needs to pay to receive power, at step **1310**.

If wireless power transmitter manager access policy states that wireless power receiver with UUID needs to pay to receive power, energy domain service may verify whether a credit card, Pay Pal, or other payment method, may be denoted within wireless power receiver registry, at step **1312**.

If a payment method is associated with wireless power receiver registry, energy domain service may send a message to wireless power transmitter manager authorizing the power transfer to wireless power receiver, at step **1314**.

Wireless power transmitter manager may report energy consumption statistics to energy domain service for subsequent billing of wireless power receiver's owner, at step 1316. Energy consumption statistics may be stored in device database and also may be sent to energy domain service and saved in wireless power receiver's registry.

In the case no payment method is associated with wireless power receiver, energy domain service may send a message to wireless power transmitter manager denying the power transfer to wireless power receiver, at step **1318**.

Else, if wireless power transmitter manager access policy states that no charge will be applied to a certain wireless power receiver which may be trying to obtain power from wireless power transmitter manager, energy domain service may confirm whether wireless power receiver is allowed to receive power from wireless power transmitter manager, at step 1320.

If wireless power receiver is allowed to receive power from wireless power transmitter manager. Energy domain service may send a message to wireless power transmitter manager authorizing the power transfer to wireless power receiver, at step **1314**.

Wireless power transmitter manager may report energy consumption statistics to energy domain service, at step **1316**. Energy consumption statistics may be stored in device database and also may be sent to energy domain service and saved in wireless power receiver's registry.

Otherwise if wireless power receiver is not allowed to receive power from the wireless power transmitter, energy domain service may send a message to wireless power transmitter manager denying the power transfer to wireless power receiver, at step **1322**.

According to some aspect of this embodiment, a customer may be able to select through a GUI device which wireless power receivers may receive charge from wireless power transmitter manager. In the GUI device, customer may be able to visualize each wireless power receiver near to wireless power transmitter manager, then customer may select which wireless power receivers are allowed to receive charge from wireless power transmitter manager. This information may be stored in device database and also may be sent to energy domain service.

### Examples

**Example #1** is a wireless power network with components similar to those described in **FIG. 12**. A customer may have a wireless power transmitter manager in his/her house. The customer invites three friends to watch a football game. Two of the three friends have a wireless power receiver cover paired with their cellphones. When both wireless power receivers are within the range of the wireless power transmitter manager, they may receive a message from wireless power transmitter manager indicating they are within range to receive power. One of the wireless power receivers may try to obtain power from wireless power transmitter manager, but first the wireless power transmitter manager may verify whether wireless power receiver is authorized to receive power. Therefore wireless power transmitter manager may send its own UUID and wireless power receiver UUID to an energy domain service. Energy domain service may verify access policy for wireless power transmitter manager to determine if a billing charge has to be applied for using wireless power transmitter manager. The access policy for wireless power transmitter manager may indicate that no charge will be applied for using wireless power transmitter manager and that any wireless power receiver is able to receive charge from it. Energy domain service may verify wireless power receiver registry and then energy domain service may authorize wireless power transmitter manager to send power to wireless power receiver.

**Example #2** is a wireless power network with components similar to those described in **FIG. 12**. A restaurant may have a wireless power transmitter manager. A customer within the restaurant has a cellphone with a wireless power receiver cover. The customer may want to charge his/her cellphone while having dinner. The customer tries to charge his/her cellphone using wireless power transmitter manager, the wireless power transmitter manager may need to verify if wireless power receiver is authorized to receive power. Therefore wireless power transmitter manager may send its own UUID and wireless power receiver UUID to an energy domain service. Energy domain service may verify access policy for wireless power transmitter manager to determine if a billing charge has to be applied for using wireless power transmitter manager. The access policy for wireless power transmitter manager may indicate that a charge will be applied for using wireless power transmitter manager. Then, energy domain service may verify wireless power register to determine whether a method of payment such as credit card or other method is associated with wireless power receiver. If a payment method is on the registry file, energy domain service may authorize wireless power transmitter manager to send power to wireless power receiver. Wireless power transmitter manager may track the amount of power sent to wireless power receiver. This information may be stored in device database and also may be sent to energy domain service to generate a bill, on behalf of the restaurant.

### III. Managing Power Transfer from Multiple Transmitters

### A. System and Method for Controlling Communication Between Wireless Power Transmitter Managers

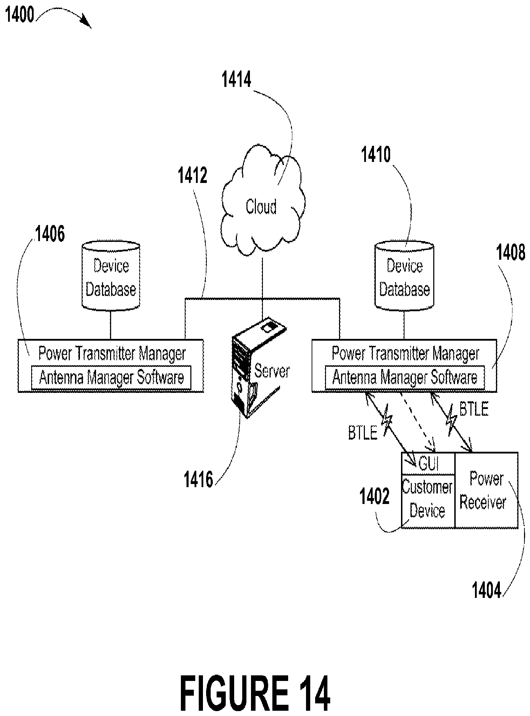

**FIG. 14** illustrates a transmitter communications transition **1400**; as used herein transmitter communications transition refers to transition of communications with a wireless power receiver, between one wireless power transmitter to another wireless power transmitter in a wireless power transmission system, according to an embodiment. The communications involved in a transmitter communications transition may include one or more of one way communications, two way communications, and wireless transfer of power. In one embodiment, transmitter communications transition refers specifically to a transition of communications with a wireless power receiver, between one wireless power transmitter manager to another wireless power transmitter manager.

In a wireless power transmission system, multiple wireless power transmitter managers and/or multiple wireless power receivers may be used for powering various customer devices **1402**. A wireless power receiver **1404** may be paired with customer device **1402** or may be built into customer device **1402**. Example of customer devices **1402** may include smartphones, tablets, music players, toys and others at the same time. Customer device **1402** may include a graphical user interface (GUI)

Each wireless power transmitter manager in the wireless power transmission system may receive customer device's signal strength from ads emitted by wireless power receiver **1404** and graphical user interface (GUI).

Each wireless power transmitter manager in the wireless power transmission system may include a device database **1410**. Device database **1410** may store customer device's power schedules, customer device's status, names, customer's sign names, and details running the system, among others, for each customer device **1402** in the wireless power transmission system near to a wireless power transmitter manager. Device database **1410** may also stores information about all system devices such as wireless power transmitter managers, wireless power receivers, end user hand-held devices, and servers, among others.

A Wi-Fi connection **1412** may be established between a wireless power transmitter manager one **1406** and a wireless power transmitter manager two **1408** to share between system devices: device database's power records, quality control information, statistics, and problem reports, among others

Each wireless power transmitter manager may create a wireless energy area model which includes information about all the movements in the system. Also this information may be stored at device database **1410**. Wireless energy area model may be used in transmitter communications transitions, i.e. in transitioning communications and power transfer from wireless power transmitter manager one **1406** to wireless power transmitter manager two **1408**. For example if a customer device **1402** moves away from wireless power transmitter manager one **1406** and nearer to wireless power transmitter manager two **1408**, this movement may be registered in the wireless energy area model.

In another aspect of this embodiment, wireless power transmitter managers may transfer power in a range between 53.3m (175 feet) to 9.1m (30 feet, but only wireless power transmitter manager with control over wireless power receiver's power record, may be allowed sending power to a specific wireless power receiver. Furthermore wireless power transmitter managers may share wireless power receiver's power record, but only the wireless power transmitter manager, with control over wireless power receiver's power record, can change the information stored for that power record in the device database **1410**.

According to some aspects of this embodiment, wireless power transmitter managers may need to fulfill two conditions to control power transfer over a customer device; customer device's signal strength threshold has to be significantly greater than a predetermined percentage of the signal strength measured by all the other wireless power transmitter managers for a minimum amount of time, where the predetermined percentage is generally well above 1700%. For example, in the case of a predetermined percentage of 400%, the signal strength threshold has to be greater than 405%. If multiple wireless power transmitter managers are within range to communicate with and transfer power to a given wireless power receiver, then only the closest wireless power transmitter manager or the last wireless power transmitter manager closest to wireless power receiver, has control of the wireless power receiver's power record in device database **1410**, however each wireless power transmitter manager may individually and simultaneously transfer power to the power record. In this case, communication with the wireless power receiver is time-phased (shared) between the multiple wireless power transmitter managers so that each can track the 3-D location of the wireless power receiver, in case it is in movement.

In another aspect of this embodiment, wireless power transmitter manager one **1406** and wireless power transmitter manager two **1408** may share customer device's information through a cloud **1414**. Both wireless power transmitter managers may be connected to cloud **1414** through network connections (not shown in **FIG. 14**). Network connections may refer to any suitable connections between computers such as, for example, intranets, local area networks (LAN), virtual private networks (VPN), wireless area networks (WAN) and the internet among others. Cloud **1414** may also be used to share between system devices: quality control information, statistics, and problem reports, among others.

According to some aspects of this embodiment, a server **1416** may be connected to cloud **1414** as a backup of device database **1410** shared by every wireless power transmitter manager in the wireless power transmission system.

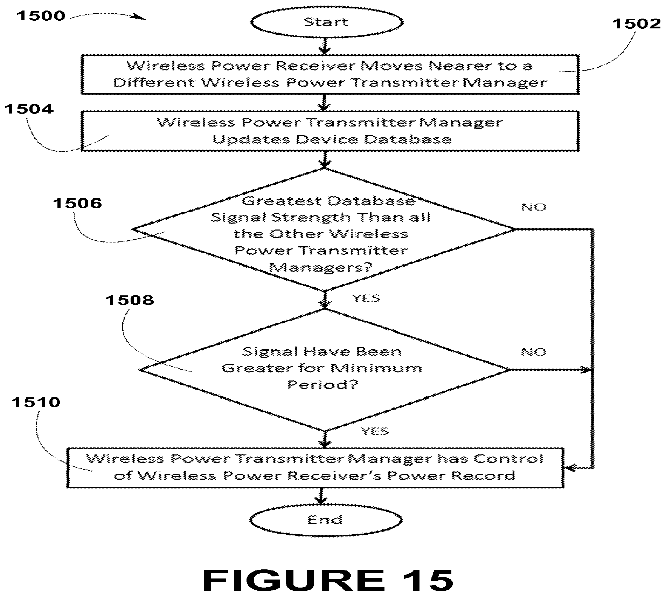

**FIG. 15** is a flowchart **1500** of a transmitter communications transition, between one wireless power transmitter manager to another, in a wireless power transmission system, according to an embodiment.

In a wireless power transmission system with two wireless power transmitter managers the process may start when a wireless power receiver moves away from a wireless power transmitter manager and nearer to another , at step **1502**. A customer device may be paired with the wireless power receiver. Example of customer devices may include smartphones, tablets, music players, and toys, among others. Customer device may include a graphical user interface (GUI).

Wireless power transmitter managers may receive customer device's signal strength from ads emitted by wireless power receiver and graphical user interface (GUI).

Subsequently, both wireless power transmitter managers may update a device database with the customer device's signal strength measured by each transmitter manager, at step 1504.

Each wireless power transmitter manager in the wireless power transmission system may include a device database. Device database may store customer device's power schedules, customer device's status, names, customer's sign names, and details running the system, among others, for each customer device in the power transmission system near to a given wireless power transmitter manager. Device database also may store information about all system devices such as wireless power transmitter managers, wireless power receivers, end user hand-held devices, and servers, among others.

According to some aspects of this embodiment, only the wireless power transmitter manager with control over wireless power receiver's power record, may be allowed sending power to a specific wireless power receiver. Also wireless power transmitter managers in the system may share wireless power receiver's power records but only the wireless power transmitter manager with control over wireless power receiver's power record, can change the information stored for that power record in the device database.

Both wireless power transmitter managers may decide which one of them first receives the strongest signal strength from customer device, at step **1506**.

According to some aspects of this embodiment, wireless power transmitter managers may need to fulfill two conditions to control power transfer over a customer device; customer device's signal strength threshold has to be significantly greater than a predetermined percentage of the signal strength measured by all the other wireless power transmitter managers for a minimum amount of time, where the predetermined percentage is generally well above 1700%. For example, in the case of a predetermined percentage of 400%, the signal strength threshold has to be greater than 405%. If multiple wireless power transmitter managers are within range to communicate with and transfer power to a given wireless power receiver, then only the closest wireless power transmitter manager or the last wireless power transmitter manager closest to wireless power receiver, has control of the wireless power receiver's power record in the device database, however each wireless power transmitter manager may individually and simultaneously transfer power to the power record. In this case, communication with the wireless power receiver is time-phased (shared) between the multiple wireless power transmitter managers so that each can track the 3-D location of the wireless power receiver, in case it is in movement.

The wireless power transmitter manager that first receives the strongest signal strength from customer device, it may verify if the signal strength of customer device has been significantly greater than predetermined percentage (for example greater than 405%, for a predetermined percentage of 400%) for a minimum amount of time, at step 1508.

The wireless power transmitter manager that first receives the strongest signal strength from customer device for a minimum amount of time may take control of wireless power receiver's power records and power transfer, at step **1510**.

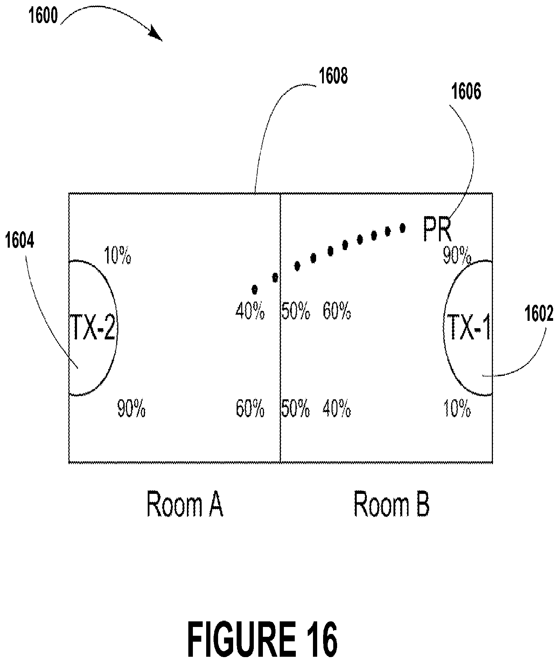

**FIG. 16** is an exemplary embodiment **1600** of a transmitter communications transition, between one wireless power transmitter manager to another, in a wireless power transmission system, according to an embodiment.

In a wireless power transmission system **1608**, multiple wireless power transmitter managers and/or multiple wireless power receivers may be used for powering various customer devices.

As an exemplary embodiment **1600**, two wireless power transmitter managers may be in different rooms. Wireless power transmitter manager one **1602** may be located in room B and wireless power transmitter manager two **1604** may be located in room A. Room A and B may be next to each other.

Wireless power receiver **1606** may be located in room B and may receive power transfer from wireless power transmitter manager one **1602**. A customer device may be paired with a wireless power receiver **1606**. Example of customer devices may include smartphones, tablets, music players, toys and others at the same time. Customer device may include a graphical user interface (GUI).

Each wireless power transmitter manager near to customer device may receive customer device's signal strength from ads emitted by wireless power receiver **1606** and graphical user interface (GUI).

Each wireless power transmitter manager in the power transmission system **1608** may have a device database. Device database may store customer device's power schedules, customer device's status, names, customer sign names, and details running the system, among others, for each customer device in the power transmission system **1608** near to any wireless power transmitter manager. Device database also may store information about all system devices such as wireless power transmitter managers, wireless power receivers, end user hand-held devices, and servers, among others.

Each wireless power transmitter manager may create a wireless energy area model which includes information about all the movements in the system. This information may be used to effect a transmitter communications transition involving control of power transfer from wireless power transmitter manager one **1602** to wireless power transmitter manager two **1604**. Wireless energy area model may be stored in the corresponding device database for each wireless power transmitter manager.

If wireless power receiver **1606** starts moving from room B to room A, wireless power transmitter manager one **1602** may take control over power transfer for wireless power receiver **1606** and wireless power transmitter's power records if customer device's signal strength threshold is significantly greater than 400% of the signal strength measured by all other wireless power transmitter managers. For example if wireless power transmitter manager one **1602** receives 23B0% signal strength from customer device, wireless power transmitter manager one **1602** may still have control over power transfer and wireless power receiver's power records

If wireless power receiver **1606** continues moving toward room A, but wireless power transmitter manager one **1602** receives 410% signal strength from customer device, wireless power transmitter manager one **1602** may still have control over power transfer and wireless power receiver's power records.

Wireless power receiver **1606** may move until mid-way between room A and room B. If wireless power transmitter manager one **1602** and wireless power transmitter manager two **1604** receives 400% signal strength from customer device, wireless power transmitter manager one **1602** may still have control over power transfer and wireless power receiver's power records.

Wireless power receiver **1606** continues moving towards room A. If wireless power transmitter manager one **1602** may receive 40% or 45% signal strength from customer device and wireless power transmitter manager two **1604** may receive 405% or 410% signal strength from customer device for a minimum amount of time, wireless power transmitter manager one **1602** may effect a transmitter communications transition, transferring control of power transfer, and may provide wireless power receiver's power record to wireless power transmitter manager two **1604**. Wireless power transmitter manager two **1604** may take control over power transfer and wireless receiver power's power record.

If wireless power receiver **1606** moves back from room A to room B, wireless power transmitter manager two **1604** may have control over power transfer for wireless power receiver **1606** until signal strength drops to 45% or less for a minimum amount of time. Wireless power transmitter manager one **1602** may take control over power transfer until customer device's signal strength reaches 405% or more for a minimum amount of time.

### Examples

**Example #1** is an application of the system described in **FIG. 14**. First wireless power transmitter manager may be located in a living room and a second wireless power transmitter manager may be located in a bedroom. A customer may be watching television in the living room, and at the same time the customer may be charging his cellphone using the wireless power transmitter manager located in the living room. The customer's cellphone may be paired with a wireless power receiver. Wireless power transmitter manager located in the living room and wireless power transmitter manager located in the bedroom may receive customer cellphone's signal strength from ads emitted by wireless power receiver and cellphone's graphical user interface (GUI). The customer may go to sleep and may take his cellphone with him; the customer's cellphone may continue charging using the wireless power transmitter manager located in the living room until his/her cellphone's signal strength drops to 45% or less. When the cellphone's signal strength drops to 45% or less for wireless power transmitter manager located in the living room, wireless power transmitter manager located in the bedroom may take control over power transfer without power transfer interruption, after it receives 405% or more signal strength for a minimum amount of time. Customer cellphone may continue charging using wireless power transmitter manager located in the bedroom. A transmitter communications transition between wireless power transmitter managers located in the living room and wireless power transmitter manager located in the bedroom may not be noticed by customer.

### B. Cluster Management of Transmitters

The wireless power management system provides cluster management of a plurality or cluster of transmitters at a location, facilitating the transfer of power from two or more transmitters in the cluster of transmitters to a power receiver. In cluster management of a plurality of transmitters, transmitter communications transition refers to transition of communications with a wireless power receiver between one wireless power transmitter to another wireless power transmitter in the plurality or cluster of transmitters. The communications involved in a transmitter communications transition may include one or more of one way communications, two way communications, and wireless transfer of power. In one embodiment, transmitter communications transition refers specifically to a transition of communications with a wireless power receiver, between one wireless power transmitter manager to another wireless power transmitter manager of the plurality or cluster of transmitters. In an embodiment, transmitter communications transitions occur as a mobile device associated with a power receiver moves to, from, or within the transmitter cluster location.

In an exemplary transmitter and receiver embodiment, a receiver is embedded in or otherwise joined to a device such as a mobile phone. In the embodiment described below, status communications between transmitter and receiver are hosted using the Bluetooth Low Energy (BLE) wireless communications protocol. BLE is exemplary of a broad range of wireless communications protocols that are capable of hosting status communications between the transmitters and receivers (for example, Wi-Fi (IEEE 23A02.11), Near Field Communication (NFC), radio frequency identification (RFID), iBeacon), and the present transmitter cluster management method is not limited to a particular status communication protocol. The transmitter and receiver each has a Bluetooth low energy (BLE) processor. In use, the transmitter's BLE processor scans for Bluetooth devices. When the receiver's Bluetooth processor powers up, it begins advertising that it is a Bluetooth device. The advertisement includes a unique identifier so that when the transmitter scans the advertisement, it will distinguish that receiver's advertisement from all other Bluetooth devices in range. In response to this identification, the transmitter immediately forms a communication connection with the receiver and will command the receiver.

After forming the BLE communication connection between transmitter and receiver, the transmitter commences sending power transfer signals to the receiver (for example, at a rate of 3400 times a second), and the receiver sends voltage sample measurements back to the transmitter. The transmitter analyzes these voltage measurements while varying the configuration of the transmitter antennas in phase and gain, until achieving a maximum voltage level. At this level, there is maximum energy in the pocket around the receiver. The wireless power transfer management system continually receives status and usage data from the transmitter, and through the transmitter, obtains status and usage information from the receiver), as with all other transmitters and receivers in the system. For example, as applied to energy harvest, the receiver communicates the updated energy harvest value to the transmitter, once a second. The transmitter accumulates data such as energy harvest values from the receiver, and from any other receiver with which it communicates. Periodically, the transmitter uploads accumulated energy information to the wireless power management system.

The present transmitter cluster management method addresses situations in which a plurality or cluster of transmitters provides power to a given receiver at a location using pocket-forming. Two or more transmitters each may execute a procedure for pocket-forming at the given receiver, as multiple pockets formed at the receiver by the two or more transmitters generally would improve power transfer efficiency or control for that receiver.

In transferring power to a given receiver with a plurality of transmitters, each transmitter will execute the same general communication procedure that applies to power transfers between a single transmitter and receiver. After forming a BLE communication connection between the respective transmitter and receiver, the transmitter begins sending power transfer signals to the receiver (e.g. 3400 times a second), and the receiver sends voltage sample measurements back to the transmitter. Each of the plurality of transmitters would analyze these voltage measurements while varying the configuration of the transmitter antennas in phase and gain, until achieving a maximum voltage level. At this level, there is maximum energy in the pocket formed by that respective transmitter around the receiver. Each transmitter that is executing power transfers to the receiver will periodically communicate accumulated energy information for the receiver, and other status and usage information, to the wireless power management system.

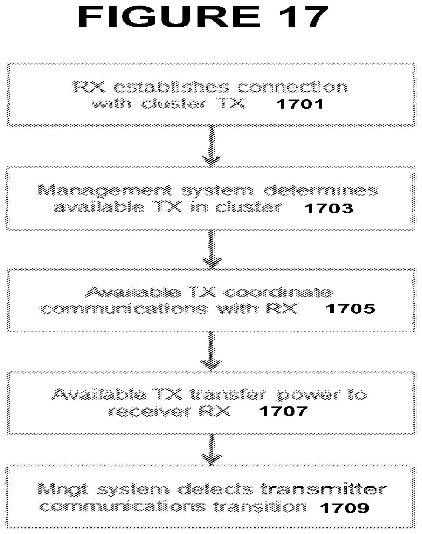

**Figure 17** illustrates steps of cluster management of a plurality or cluster of transmitters TX at a location, to facilitate power transfer to a receiver RX. In the initial step **1701,** receiver RX establishes communications with a transmitter TX within the cluster. Upon establishing communications with receiver RX, the transmitter TX communicates the unique identifier of the newly identified power receiver RX to the wireless power management system. In one embodiment transmitter TX is a master transmitter that has been designated to manage communications for the cluster of transmitters. At step **1703**, the wireless power management system determines which transmitters within the cluster at that location are available to transfer power to receiver RX.

In one embodiment, the available transmitters TX will include any transmitter within the cluster capable of transferring power to receiver RX, including the transmitter of step **1701** and any other TX within range of the receiver as reported to the management system. One or more wireless power transmitters may automatically transmit power to any single wireless power receiver that is close enough for it to establish a communication connection using a suitable communication technology, including Bluetooth Low Energy or the like. The wireless power receiver may then power or charge an electrically connected client device.

However this may not be the case at some locations with a cluster of transmitters. The system can be configured by the wireless power management system to transmit power only to specific wireless power receivers depending on specific system criteria or conditions, such as the time or hour of the day for automatic time-based scheduled power transmission, wireless power receiver physical location, owner of client device, or other suitable conditions and/or criteria. For example, a transmitter TX of the cluster of transmitters may be dedicated to powering one or more device of a particular user, wherein other devices and receivers are not authorized to receive power from that transmitter. In the following discussion, references to available transmitters or to transmitters available to a given receiver mean transmitters that are within power transfer range of that receiver, and that can be used to transfer power to that receiver based upon all other considerations, such as any limitation on transmitter use in specific system criteria or conditions recorded in the wireless power management system.

At step **1705**, it is assumed that two or more transmitters TX are available to transfer power to receiver RX. At this step, the two or more transmitters coordinate communications with receiver RX in an embodiment (such as Bluetooth^{®} communications) in which only one transmitter TX can communicate with receiver RX at a time. In one embodiment as explained below, communications are coordinated by one of the two or more transmitters which is selected as a master transmitter. At step **1707**, the available transmitters TX transfer power to receiver RX, subject to the coordination of communications at step **1705**. At step **1709**, the management system detects a transmitter communications transition within the cluster of transmitters that are in communication with receiver RX. This transmitter communications transition may involve one of the available transmitters ceasing its communications with receiver RX (e.g. due to receiver RX moving out of range of that transmitter); a new transmitter TX establishing communications with receiver RX; or a combination of these occurrences. Typically in this event, unless the transmitter communications transition entails the end of all connections of receiver RX with transmitters in the cluster, the power transfer management system and the transmitter(s) available after the transition will repeat steps **1703** through **1709** of this cluster management method.

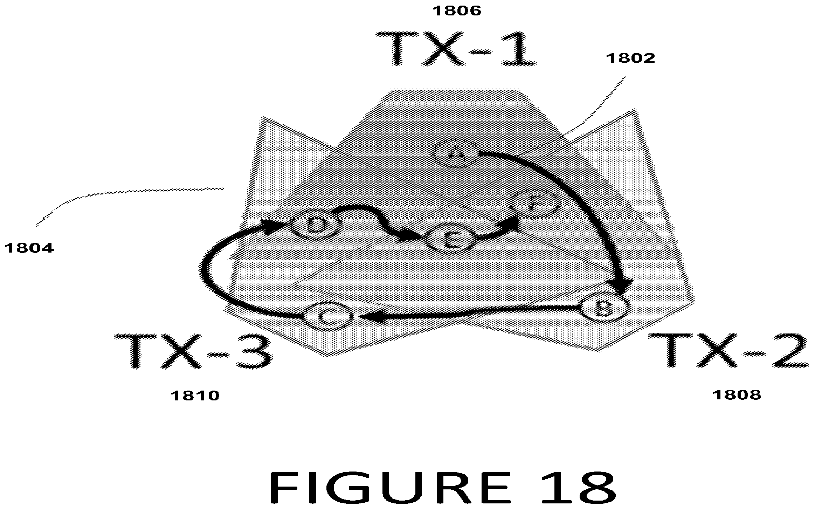

**Figure 18** shows the path **1802** of a user with mobile phone in hand, who enters and travels through a location **1804** including a cluster of transmitters TX1 **1806**, TX2 **1808**, and TX3 **1810**, As the device and receiver **1802** travel the path **1802** through nodes A → B → C → D → E → F, transmitters TX1 **1806**, TX2 **1808**, and TX3 **1810** undergo the following transmitter communications transitions: (A) TX1 **1806** detects the receiver and starts transmitting power; (B) The receiver moves out of range of TX1 **1806** which ceases power transfer; TX2 **1808** detects the receiver and starts transferring power; (C) The receiver moves out of range of TX2 **1808** which ceases power transfer; TX3 **1810** detects the receiver and starts transferring power; (D) The receiver remains within range of TX3 **1810** which continues power transfer; TX1 **1806** detects the receiver and re-starts transferring power; (E) The receiver remains within range of TX1 **1806** and TX3 **1810**, which continue power transfer; TX2 **1808** detects the receiver and re-starts transferring power, so that all three transmitters are transferring power; and (F) The receiver moves out of range of TX3 **1810** which ceases power transfer; the receiver remains within range of TX1 **1806** and TX2 **1808**, which continue power transfer.

When multiple wireless power transmitters are executing power transfers to a single receiver using BLE communications between transmitters and receiver, one or more wireless power transmitter managers embedded in the wireless power transmitters coordinate communications between the respective transmitters and the receiver. Bluetooth protocols only permit one communication connection at a time between the wireless power receiver and the multiple wireless power transmitters. Wireless power manager application software within the wireless power transmitter managers may carry out a routine, as a set of instructions and/or algorithm, for coordinating communication between communication managers of the multiple wireless power transmitters (wireless power transmitter cluster). This routine coordinates contemporaneous communications of the respective wireless power transmitters with the power receiver. As used in this description of cluster management of wireless power transmitters, contemporaneous means that at least two wireless power transmitters communicate with a power receiver during the same general period of time, but it does not mean that more than one wireless power transmitter communicate with the power receiver at exactly the same time. In an embodiment, the routine carried out by the wireless power manager application employs time division multiplexing (TDM) of contemporaneous communications between at least two wireless power transmitters and the power receiver.

In one embodiment involving a centralized control method, the wireless power management system selects one of the transmitters as a master transmitter. The master transmitter controls the order and timing of communications with the receiver among the plurality of transmitters that are executing power transfers to the receiver. Alternative methods for coordinating communications also are possible besides this centralized control method, such as methods involving decentralized control among the plurality of transmitters.

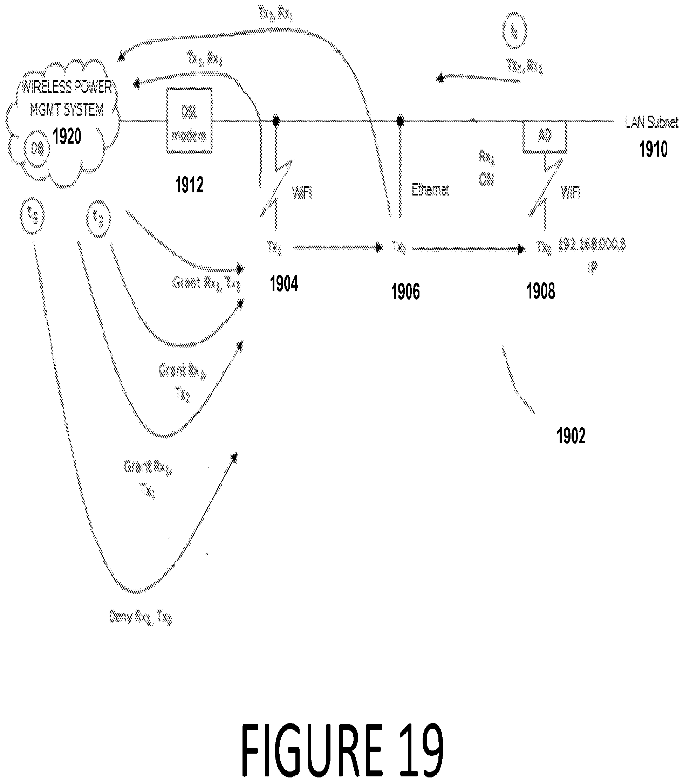

In a system **1902** illustrated in **Figure 19**, each of a plurality or cluster of transmitters TX1 **1904**, TX2 **1906**, TX3 **1908** is connected with an enterprise bus **1910** such as Wi-Fi or Ethernet. When the system **1902** is installed, it is configured for network control, e.g. via a local area network subnet. Transmitters TX1 **1904** and TX3 **1908** are connected to LAN **1910** by Wi-Fi, and TX2 **1906** is connected by Ethernet. An access point is included at **1912**. Thus, the transmitters can exchange communications across a TCP/IP local area subnet, ensuring guaranteed communication using TCP sockets. This arrangement also allows the transmitters to broadcast information using an internet protocol such as the User Datagram Protocol (UDP), providing communications analogous to Bluetooth advertising.

When transmitters TX1 **1904**, TX2 **1906**, TX3 **1908** power up, each of the transmitters begins regularly to broadcast across the network a message including its IP address and other information identifying the transmitter. Each transmitter in the network has access to broadcasts of the other transmitters, and each transmitter builds a list of all transmitters of the network, including identification of one of the transmitters as master transmitter. In a first embodiment of centralized control, the system identifies as master transmitter the transmitter with the lowest IP number, here shown as TX3 with IP address 192.168.000.3. Within the general approach of centralized control of transmitter-receiver communications by a master transmitter, other algorithms besides lowest IP number can be used to determine the master transmitter.

The system repeats this procedure regularly, so that if master transmitter TX3 went off line, the remaining transmitters would recalculate and assign one of the remaining transmitters as master. If the other transmitters did not see a UDP broadcast message from the master transmitter within a set period of time (e.g., 15 seconds), these remaining transmitters would recalculate the list of available transmitters and would assign one of the remaining transmitters as master based upon the applicable algorithm (in this embodiment, lowest IP number).

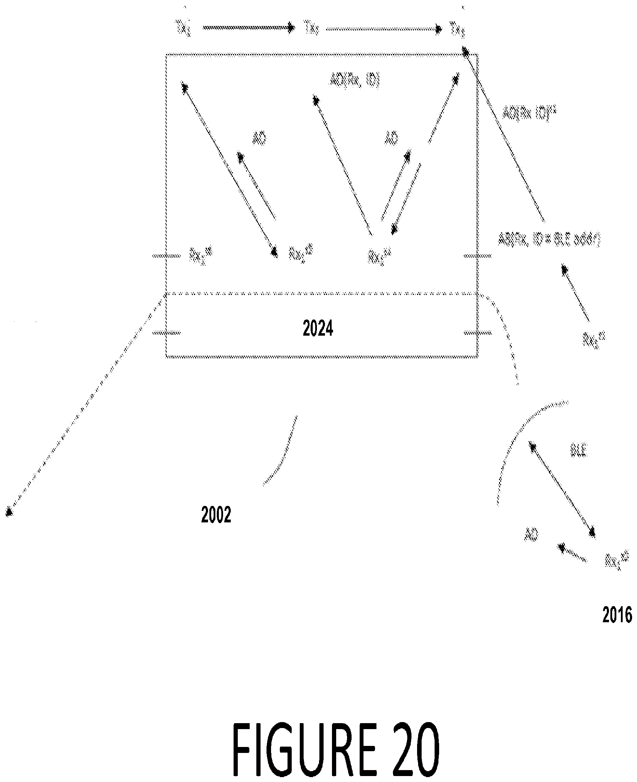

Receiver RX1 **1916** periodically broadcasts Bluetooth advertisements as the device with receiver approaches location **2024** (seen in **FIG. 20**). When transmitter TX3 **1908** first detects a BLE advertisement from receiver RX1 **1916** (step **1701** in the method of **Fig. 17**), it acquires the receiver's unique ID (Bluetooth address), and TX3 transmits this information to the management system **1920** via modem **1912** (both communications are shown schematically at time T1). Management system **1920** can reference information on the identified receiver; the local power management facility including all transmitters; information pertinent to authorization of the receiver (such as the enterprise or account associated with the receiver); pricing information; and other applicable information such as information on the transmitter TX3 that initiated the communication. In this embodiment, the management system **1920** determines that all transmitters in the cluster TX1, TX2 and TX3 are available for power transfers to receiver RX1 **1916**, and sends this message to the master transmitter (step **1703** in the method of **Fig. 17**).

**Figures 19** and **20** schematically illustrate a method of transmitter cluster management at a location (e.g., room **2024**). At time T3, management system **1920** sends the master transmitter a message granting receiver RX1 access to wireless power transmission by transmitters TX1 **1904**, TX2 **1906**, TX3 **1908**. After the initial authorization of transfer of power to receiver RX1 at time T3, in **Figure 20** receiver RX1 is shown entering and moving across room **2024** at various times T4, T5, and T6. At time T4, receiver RX1 is in range of transmitters TX2 and TX3. At time T5, receiver RX1 enters the range of transmitter TX1 and is in range of all three transmitters TX1, TX2 and TX3. When transmitter TX1 first detects receiver RX1, it sends a message to management system **1920**, which sends the master transmitter TX3 a return communication granting transmitter TX1 power transfer to receiver RX1.

During a period following time T5, all three transmitters TX1, TX2, and TX3 are available to transfer power to receiver RX1, subject to coordination of communications of the three transmitters with receiver RX1 by the master transmitter TX3 (step **1705** in the method of **Fig. 17**). In one embodiment, master transmitter TX3 commands transmitters TX1 and TX2 to limit their communications with the receiver to one second of every period of three seconds (i.e. so that transmitters T1, T2 and T3 each is allotted one second from the three second period). This could be done for example by master transmitter TX3 sending one of the other transmitters an "on" signal at the beginning of the one second period for which communications are to occur for that other transmitter, and transmitter TX3 sending an "off" signal at the end of that period. Alternatively, master transmitter TX3 could send an "on" signal at the beginning of the "on" period for communications, coupled with the duration of that "on" period. During time periods in which a given transmitter is not communicating with receiver RX1, the transmitter will control the phase of its transmit antennas based upon the most recent communications obtained from the receiver. Given the high volume of communications transmitted by receiver RX1 during each one second "on" period, such intermittent time periods for communications have been observed to be sufficient to permit each transmitter to adjust its antenna phases to regulate power transfer (step **1707** in the method of **Fig. 17**), when transmitting power to a receiver in motion.

At time T6, receiver RX3 has left the range of transmitter TX3, while remaining within the range of transmitters TX1 and TX2. During the period in which a transmitter has been authorized to transmit power to an identified receiver, among other data the transmitter communicates to management system **1920**, are data on the signal strength of its communications with the receiver, so that by time T6 management system **1920** detects that transmitter TX3 is out of range for receiver RX1 (step **1709** in the method of **Fig. 17**). Management system **1920** thereupon sends a deny access message for receiver RX1 to transmitter TX3, and selects one of the remaining transmitters (transmitter TX1, which has the lower IP number) as master transmitter. Thereafter, transmitter TX1 controls communications between receiver RX1 and the transmitters TX1 and TX2 that are still transferring power to receiver RX1.

In addition to tracking which transmitters are within range of a given receiver, the management system **1920** can limit the power output to given receivers and devices, e.g. based upon safety concerns. Various mobile phones have maximum DC power levels at or just under 4.0 watts (e.g., 3.96, 3.97, 3.98 or 3.99 watts). In the event of a transmitter cluster management transition, i.e. a change to the set of transmitters in communication with a given receiver, management system **1920** can send a message to the master transmitter to ensure compliance with any applicable maximum power level. This message would instruct available transmitters to limit power transfer from individual transmitters among the cluster of transmitters, thereby to ensure safe power transfers from each transmitter.

The foregoing discussion describes controlling cluster management of transmitters through the interaction of a cluster of transmitters with a wireless power management system, preferably a cloud computing management system with networked remote servers are networked for centralized data storage and online access to data management services. In an alternative embodiment, the cluster of transmitters achieves transmitter cluster management under the control of the transmitters themselves, without oversight by a wireless power management system. This is possible since the transmitters themselves can replicate most of the management information and functionality used by the wireless power management system in transmitter cluster management.

The transmitter cluster management scheme discussed above involves hierarchical management of all transmitters at given locations, sometimes herein called a transmitter cluster, in controlling power transfer by the transmitters to a receiver at that location. Other transmitter cluster management schemes are possible, which may manage transmitter-receiver connections at any level of a hierarchical structure. For example, the management system may define a given transmitter cluster as a subset of all transmitters at a location, and manage receiver interactions only with these transmitters separate from other transmitters at the location. Furthermore, the transmitter cluster management scheme may manage transmitter-receiver power transfers and communications across multiple, neighboring locations. For example, two neighboring households each may have two transmitters, which may be organized into one or two clusters managed by the cloud based power transfer management system. The system could manage neighboring locations as clusters, so all four transmitters would be part of one cluster; or, the system could manage each billing address as a separate cluster, so there would be two clusters each with two transmitters.

While various aspects and embodiments have been disclosed, other aspects and embodiments are contemplated. The various aspects and embodiments disclosed are for purposes of illustration and are not intended to be limiting, with the true scope being indicated by the following claims.

The foregoing method descriptions and the interface configuration are provided merely as illustrative examples and are not intended to require or imply that the steps of the various embodiments must be performed in the order presented. As will be appreciated by one of skill in the art the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations can be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

## Claims

1. A method for selecting which power transmitter should deliver wireless power to a device in a wireless power delivery network, the method comprising:
at a management system (1920) comprising a cluster of wireless power transmitters, including a first power transmitter (1904), a second power transmitter (1906) and a plurality of wireless power transmitter managers:
determining that the first power transmitter (1904) and the second power transmitter (1906) are within a power transfer range of a wireless power receiver, the wireless power receiver being separate from the management system (1920);
designating, by the management system (1920), a first transmitter manager that is communicatively coupled to the first power transmitter (1904) as a master transmitter of the cluster of wireless power transmitters, wherein the master transmitter is configured to control order and timing of communications with the wireless power receiver among power transmitters in the cluster of wireless power transmitters that are within the power transfer range of the wireless power receiver, wherein each power transmitter in the management system builds a list of all power transmitters of the wireless power delivery network, including identification of one of the power transmitters designated as the master transmitter, the designating of the first transmitter manager as the master transmitter being based on the respective lists built by each power transmitter and that the first power transmitter (1904) is not off line;
instructing the master transmitter to grant the wireless power receiver access to wireless power transmissions from the first power transmitter and the second power transmitter, wherein the first power transmitter and the second power transmitter transmit radio frequency, RF, power waves to the wireless power receiver after the access is granted,
wherein the wireless power receiver is configured to convert energy from the RF powers waves into usable power for charging the wireless power receiver or a device that is coupled with the wireless power receiver.

2. The method of claim 1, further comprising, at the management system:
determining that the first power transmitter (1904) is no longer within the power transfer range of the wireless power receiver; and
instructing the master transmitter to deny the wireless power receiver access to wireless power transmissions from the first power transmitter (1904); and
in response to determining that the first power transmitter (1904) is no longer within the power transfer range of the wireless power receiver:
designating a second transmitter manager that is communicatively coupled to the second power transmitter (1906) as a new master transmitter of the cluster of wireless power transmitters.

3. The method of claim 2, further comprising, at the management system:
determining, from the power transmitters in the cluster of wireless power transmitters, that a third power transmitter (1908) is within the power transfer range of the wireless power receiver; and
designating a third transmitter manager that is communicatively coupled to the third power transmitter (1908) as a new master transmitter of the cluster of wireless power transmitters.

4. The method of claim 3, wherein:
the wireless power receiver is at a first location when the first power transmitter (1904) and the second power transmitter (1906) are within the power transfer range of the wireless power receiver; and
the wireless power receiver is at a second location, different from the first location, when the second power transmitter (1906) and the third power transmitter (1908) are within the power transfer range of the wireless power receiver.

5. The method of claim 1, wherein determining that the first power transmitter (1904) and the second power transmitter (1906) are within the power transfer range of the wireless power receiver comprises:
receiving a first message from the first power transmitter (1904) that the first power transmitter (1904) detects the wireless power receiver; and
receiving a second message, distinct from the first message, from the second power transmitter (1906) that the second power transmitter (1906) detects the wireless power receiver.

6. The method of any preceding claim, wherein the wireless power receiver is integrated with the device.

7. The method of claim 1, wherein the management system (1920):
instructs the first power transmitter (1904) to communicate with the wireless power receiver at first times; and
instructs the second power transmitter (1906) to communicate with the wireless power receiver at second times.

8. The method of claim 1, further comprising, at the management system (1920):
determining, from the power transmitters in the cluster of wireless power transmitters, that a third power transmitter (1908) is within the power transfer range of the wireless power receiver; and
instructing the master transmitter to grant the wireless power receiver access to wireless power transmissions from the third power transmitter (1908), wherein the third power transmitter (1908) transmits RF power waves, along with the first (1904) and second (1906) power transmitters, to the wireless power receiver after the access is granted.

9. The method of any preceding claim, wherein designating the first transmitter manager as the master transmitter of the cluster of wireless power transmitters comprises:
receiving a first broadcast from the first power transmitter (1904) that includes a first Internet Protocol, IP,
address associated with the first power transmitter (1904);
receiving a second broadcast from the second power transmitter (1906) that includes a second IP address associated with the second power transmitter (1906); and
determining that the first IP address, not the second IP address, satisfies selection criteria as having a lower IP number.

10. A non-transitory, computer-readable storage medium storing one or more programs, the one or more programs comprising instructions that, when executed by a management system (1920) that includes a cluster of wireless power transmitters, including a first power transmitter (1904), a second power transmitter (1906) and a plurality of wireless power transmitter managers, cause the management system (1920) to perform the method of any one of claims 1-9.

11. A management system (1920) for selecting which power transmitter should deliver wireless power to a device in a wireless power delivery network, the system comprising:
a cluster of wireless power transmitters, including a first power transmitter (1904), a second power transmitter (1906) and a plurality of wireless power transmitter managers,
wherein the management system (1920) is further configured to perform the method of any one of claims 1-9.

## Patentansprüche

1. Verfahren zum Auswählen, welcher Leistungssender drahtlose Leistung an eine Vorrichtung in einem drahtlosen Stromversorgungsnetz liefern soll, das Verfahren umfassend:
an einem Verwaltungssystem (1920), das eine Gruppe drahtloser Leistungssender umfasst, die einen ersten Leistungssender (1904), einen zweiten Leistungssender (1906) und eine Mehrzahl von drahtlosen Leistungssenderverwaltern enthält:
Bestimmen, dass der erste Leistungssender (1904) und der zweite Leistungssender (1906) innerhalb eines Leistungsübertragungsbereichs eines drahtlosen Leistungsempfängers sind, wobei der drahtlose Leistungsempfänger separat von dem Verwaltungssystem (1920) ist;
Benennen, durch das Verwaltungssystem (1920), eines ersten Senderverwalters, der kommunikativ an den ersten Leistungssender (1904) als Hauptsender der Gruppe von drahtlosen Leistungssendern gekoppelt ist, wobei der Hauptsender ausgestaltet ist, eine Reihenfolge und ein Timing von Kommunikationen mit dem drahtlosen Leistungsempfänger unter den Leistungssendern in der Gruppe von drahtlosen Leistungssendern zu steuern, die innerhalb des Leistungsübertragungsbereichs des drahtlosen Leistungsempfängers sind, wobei jeder Leistungssender im Verwaltungssystem eine Liste von allen Leistungssendern des drahtlosen Stromversorgungsnetzes aufbaut, einschließlich einer Identifikation von einem der Leistungssender, der als Hauptsender benannt ist, wobei das Benennen des ersten Senderverwalters als Hauptsender auf den entsprechenden Listen beruht, die von jedem Leistungssender aufgebaut werden, und darauf, dass der erste Leistungssender (1904) nicht offline ist;
Anweisen des Hauptsenders, dem drahtlosen Leistungsempfänger Zugriff auf drahtlose Leistungsübertragungen von dem ersten Leistungssender und dem zweiten Leistungssender zu gewähren, wobei der erste Leistungssender und der zweite Leistungssender Radiofrequenz-, RF-, Leistungswellen an den drahtlosen Leistungsempfänger senden, nachdem der Zugriff gewährt wird,
wobei der drahtlose Leistungsempfänger ausgestaltet ist, Energie von den RF-Leistungswellen in nutzbare Leistung zum Laden des drahtlosen Leistungsempfängers oder einer Vorrichtung, die an den drahtlosen Leistungsempfänger gekoppelt ist, umzuwandeln.

2. Verfahren nach Anspruch 1, ferner umfassend, an dem Verwaltungssystem:
Bestimmen, dass der erste Leistungssender (1904) nicht mehr innerhalb des Leistungsübertragungsbereichs des drahtlosen Leistungsempfängers ist; und
Anweisen des Hauptsenders, dem drahtlosen Leistungsempfänger Zugriff auf drahtlose Leistungsübertragungen von dem ersten Leistungssender (1904) zu verweigern; und
ansprechend auf das Bestimmen, dass der erste Leistungssender (1904) nicht mehr innerhalb des Leistungsübertragungsbereichs des drahtlosen Leistungsempfängers ist:
Benennen eines zweiten Senderverwalters, der kommunikativ an den zweiten Leistungssender (1906) als neuer Hauptsender der Gruppe von drahtlosen Leistungssendern gekoppelt ist.

3. Verfahren nach Anspruch 2, ferner umfassend, an dem Verwaltungssystem:
Bestimmen, aus den Leistungssendern in der Gruppe von drahtlosen Leistungssendern, dass ein dritter Leistungssender (1908) innerhalb des Leistungsübertragungsbereichs des drahtlosen Leistungsempfängers ist; und
Benennen eines dritten Senderverwalters, der kommunikativ an den dritten Leistungssender (1908) als neuer Hauptsender der Gruppe von drahtlosen Leistungssendern gekoppelt ist.

4. Verfahren nach Anspruch 3, wobei:
der drahtlose Leistungsempfänger an einer ersten Stelle ist, wenn der erste Leistungssender (1904) und der zweite Leistungssender (1906) innerhalb des Leistungsübertragungsbereichs des drahtlosen Leistungsempfängers sind; und
der drahtlose Leistungsempfänger an einer zweiten Stelle ist, die sich von der ersten Stelle unterscheidet, wenn der zweite Leistungssender (1906) und der dritte Leistungssender (1908) innerhalb des Leistungsübertragungsbereichs des drahtlosen Leistungsempfängers sind.

5. Verfahren nach Anspruch 1, wobei das Bestimmen, dass der erste Leistungssender (1904) und der zweite Leistungssender (1906) innerhalb des Leistungsübertragungsbereichs des drahtlosen Leistungsempfängers sind, umfasst:
Empfangen einer ersten Nachricht von dem ersten Leistungssender (1904), dass der erste Leistungssender (1904) den drahtlosen Leistungsempfänger erfasst; und
Empfangen einer zweiten Nachricht, die sich von der ersten Nachricht unterscheidet, von dem zweiten Leistungssender (1906), dass der zweite Leistungssender (1906) den drahtlosen Leistungsempfänger erfasst.

6. Verfahren nach einem der vorhergehenden Ansprüche, wobei der drahtlose Leistungsempfänger in der Vorrichtung integriert ist.

7. Verfahren nach Anspruch 1, wobei das Verwaltungssystem (1920):
den ersten Leistungssender (1904) anweist, mit dem drahtlosen Leistungsempfänger zu ersten Zeiten zu kommunizieren; und
den zweiten Leistungssender (1906) anweist, mit dem drahtlosen Leistungsempfänger zu zweiten Zeiten zu kommunizieren.

8. Verfahren nach Anspruch 1, ferner umfassend, an dem Verwaltungssystem (1920):
Bestimmen, aus den Leistungssendern in der Gruppe von drahtlosen Leistungssendern, dass ein dritter Leistungssender (1908) innerhalb des Leistungsübertragungsbereichs des drahtlosen Leistungsempfängers ist; und
Anweisen des Hauptsenders, dem drahtlosen Leistungsempfänger Zugriff auf drahtlose Leistungsübertragungen von dem dritten Leistungssender (1908) zu gewähren, wobei der dritte Leistungssender (1908) RF-Leistungswellen, zusammen mit dem ersten (1904) und dem zweiten (1906) Leistungssender, an den drahtlosen Leistungsempfänger sendet, nachdem der Zugriff gewährt wird.

9. Verfahren nach einem der vorhergehenden Ansprüche, wobei das Benennen des ersten Senderverwalters als Hauptsender der Gruppe von drahtlosen Leistungssendern umfasst:
Empfangen einer ersten Übertragung von dem ersten Leistungssender (1904), die eine erste Internetprotokoll-, IP-, Adresse enthält, die dem ersten Leistungssender (1904) zugehörig ist;
Empfangen einer zweiten Übertragung von dem zweiten Leistungssender (1906), die eine zweite IP-Adresse enthält, die dem zweiten Leistungssender (1906) zugehörig ist; und
Bestimmen, dass die erste IP-Adresse, nicht die zweite IP-Adresse, Auswahlkriterien wie das Aufweisen einer niedrigeren IP-Nummer erfüllt.

10. Nicht-flüchtiges, computerlesbares Speichermedium, das ein oder mehrere Programme speichert, wobei das eine oder die mehreren Programme Anweisungen umfassen, die, wenn sie von einem Verwaltungssystem (1920), das eine Gruppe von drahtlosen Leistungssendern enthält, die einen ersten Leistungssender (1904), einen zweiten Leistungssender (1906) und eine Mehrzahl von drahtlosen Leistungssenderverwaltern enthält, ausgeführt werden, verursachen, dass das Verwaltungssystem (1920) das Verfahren nach einem der Ansprüche 1 bis 9 durchführt.

11. Verwaltungssystem (1920) zum Auswählen, welcher Leistungssender drahtlose Leistung an eine Vorrichtung in einem drahtlosen Stromversorgungsnetz liefern soll, das System umfassend:
eine Gruppe drahtloser Leistungssender, die einen ersten Leistungssender (1904), einen zweiten Leistungssender (1906) und eine Mehrzahl von drahtlosen Leistungssenderverwaltern enthält,
wobei das Verwaltungssystem (1920) ferner ausgestaltet ist, das Verfahren nach einem der Ansprüche 1 bis 9 durchzuführen.

## Revendications

1. Procédé pour sélectionner quel émetteur de puissance doit distribuer une puissance sans fil à un dispositif dans un réseau de distribution de puissance sans fil, le procédé comprenant les étapes consistant à :
au niveau d'un système de gestion (1920) comprenant un groupe d'émetteurs de puissance sans fil, comportant un premier émetteur de puissance (1904), un deuxième émetteur de puissance (1906) et une pluralité de gestionnaires d'émetteur de puissance sans fil :
déterminer que le premier émetteur de puissance (1904) et le deuxième émetteur de puissance (1906) se trouvent dans une portée de transfert de puissance d'un récepteur de puissance sans fil, le récepteur de puissance sans fil étant séparé du système de gestion (1920) ;
désigner, par le système de gestion (1920), un premier gestionnaire d'émetteur qui est couplé en communication au premier émetteur de puissance (1904) en tant qu'émetteur maître du groupe d'émetteurs de puissance sans fil, dans lequel l'émetteur maître est configuré pour commander l'ordre et le cadencement de communications avec le récepteur de puissance sans fil parmi des émetteurs de puissance dans le groupe d'émetteurs de puissance sans fil qui se trouvent dans la portée de transfert de puissance du récepteur de puissance sans fil, dans lequel chaque émetteur de puissance dans le système de gestion construit une liste de tous les émetteurs de puissance du réseau de distribution de puissance sans fil, comprenant l'identification de l'un des émetteurs de puissance désigné comme étant l'émetteur maître, la désignation du premier gestionnaire d'émetteur comme émetteur maître étant basée sur les listes respectives construites par chaque émetteur de puissance et sur le fait que le premier émetteur de puissance (1904) n'est pas hors ligne ;
demander à l'émetteur maître d'accorder au récepteur de puissance sans fil l'accès à des transmissions de puissance sans fil provenant du premier émetteur de puissance et du deuxième émetteur de puissance, dans lequel le premier émetteur de puissance et le deuxième émetteur de puissance transmettent des ondes de puissance radiofréquence, RF, au récepteur de puissance sans fil une fois l'accès accordé,
dans lequel le récepteur de puissance sans fil est configuré pour convertir de l'énergie provenant des ondes de puissance RF en puissance utilisable pour charger le récepteur de puissance sans fil ou un dispositif qui est couplé au récepteur de puissance sans fil.

2. Procédé selon la revendication 1, comprenant en outre, au niveau du système de gestion :
la détermination que le premier émetteur de puissance (1904) n'est plus dans la portée de transfert de puissance du récepteur de puissance sans fil ; et
la demande à l'émetteur maître de refuser au récepteur de puissance sans fil l'accès à des transmissions de puissance sans fil provenant du premier émetteur de puissance (1904) ; et
en réponse à la détermination que le premier émetteur de puissance (1904) n'est plus dans la portée de transfert de puissance du récepteur de puissance sans fil :
la désignation d'un deuxième gestionnaire d'émetteur qui est couplé en communication au deuxième émetteur de puissance (1906) en tant que nouvel émetteur maître du groupe d'émetteurs de puissance sans fil.

3. Procédé selon la revendication 2, comprenant en outre, au niveau du système de gestion :
la détermination, à partir des émetteurs de puissance dans le groupe d'émetteurs de puissance sans fil, qu'un troisième émetteur de puissance (1908) se trouve dans la portée de transfert de puissance du récepteur de puissance sans fil ; et
la désignation d'un troisième gestionnaire d'émetteur qui est couplé en communication au troisième émetteur de puissance (1908) en tant que nouvel émetteur maître du groupe d'émetteurs de puissance sans fil.

4. Procédé selon la revendication 3, dans lequel :
le récepteur de puissance sans fil se trouve à un premier emplacement lorsque le premier émetteur de puissance (1904) et le deuxième émetteur de puissance (1906) se trouvent dans la portée de transfert de puissance du récepteur de puissance sans fil ; et
le récepteur de puissance sans fil se trouve à un second emplacement, différent du premier emplacement, lorsque le deuxième émetteur de puissance (1906) et le troisième émetteur de puissance (1908) se trouvent dans la portée de transfert de puissance du récepteur de puissance sans fil.

5. Procédé selon la revendication 1, dans lequel la détermination que le premier émetteur de puissance (1904) et le deuxième émetteur de puissance (1906) se trouvent dans la portée de transfert de puissance du récepteur de puissance sans fil comprend :
la réception d'un premier message provenant du premier émetteur de puissance (1904) indiquant que le premier émetteur de puissance (1904) détecte le récepteur de puissance sans fil ; et
la réception d'un second message, distinct du premier message, provenant du deuxième émetteur de puissance (1906) indiquant que le deuxième émetteur de puissance (1906) détecte le récepteur de puissance sans fil.

6. Procédé selon l'une quelconque des revendications précédentes, dans lequel le récepteur de puissance sans fil est intégré au dispositif.

7. Procédé selon la revendication 1, dans lequel le système de gestion (1920) :
demande au premier émetteur de puissance (1904) de communiquer avec le récepteur de puissance sans fil à des premiers instants ; et
demande au deuxième émetteur de puissance (1906) de communiquer avec le récepteur de puissance sans fil à des seconds instants.

8. Procédé selon la revendication 1, comprenant en outre, au niveau du système de gestion (1920) :
la détermination, à partir des émetteurs de puissance dans le groupe d'émetteurs de puissance sans fil, qu'un troisième émetteur de puissance (1908) se trouve dans la portée de transfert de puissance du récepteur de puissance sans fil ; et
la demande à l'émetteur maître d'accorder au récepteur de puissance sans fil l'accès à des transmissions de puissance sans fil à partir du troisième émetteur de puissance (1908), dans lequel le troisième émetteur de puissance (1908) transmet des ondes de puissance RF, conjointement avec les premier (1904) et deuxième (1906) émetteurs de puissance, au récepteur de puissance sans fil une fois l'accès accordé.

9. Procédé selon l'une quelconque des revendications précédentes, dans lequel la désignation du premier gestionnaire d'émetteur comme émetteur maître du groupe d'émetteurs de puissance sans fil comprend :
la réception d'une première diffusion depuis le premier émetteur de puissance (1904) qui comprend une première adresse de protocole Internet, IP, associée au premier émetteur de puissance (1904) ;
la réception d'une seconde diffusion depuis le deuxième émetteur de puissance (1906) qui comprend une seconde adresse IP associée au deuxième émetteur de puissance (1906) ; et
la détermination que la première adresse IP, et non la seconde adresse IP, satisfait à des critères de sélection comme en ayant un numéro IP inférieur.

10. Support de stockage non-transitoire, lisible par ordinateur, stockant un ou plusieurs programmes, les un ou plusieurs programmes comprenant des instructions qui, lorsqu'elles sont exécutées par un système de gestion (1920) qui comporte un groupe d'émetteurs de puissance sans fil, comportant un premier émetteur de puissance (1904), un deuxième émetteur de puissance (1906) et une pluralité de gestionnaires d'émetteur de puissance sans fil, amènent le système de gestion (1920) à effectuer le procédé selon l'une quelconque des revendications 1 à 9.

11. Système de gestion (1920) pour sélectionner quel émetteur de puissance doit distribuer de la puissance sans fil à un dispositif dans un réseau de distribution de puissance sans fil, le système comprenant :
un groupe d'émetteurs de puissance sans fil, comportant un premier émetteur de puissance (1904), un deuxième émetteur de puissance (1906) et une pluralité de gestionnaires d'émetteur de puissance sans fil,
dans lequel le système de gestion (1920) est en outre configuré pour effectuer le procédé selon l'une quelconque des revendications 1 à 9.
